# EUROPÄISCHE PATENTANMELDUNG

(11) **EP 4 230 602 A1**
(43) Veröffentlichungstag der Anmeldung: **23.08.2023**
(21) Anmeldenummer: 23156711.6
(22) Anmeldetag: 15.02.2023
(51) Int. Cl.: C05F 17/907

(54) **DYNAMISCHER KOMPOSTER**

(30) Priorität: 17.02.2022 DE 102022000575
(71) Anmelder: Rasch, Helmut, 22297 Hamburg (DE)
(72) Erfinder: Rasch, Helmut, 22297 Hamburg (DE)
(74) Vertreter: Patentanwälte Olbricht Buchhold Keulertz

(57) **Zusammenfassung**

Vorgeschlagen wird ein Komposter wobei der Komposter einen Bodenrost, eine Tragvorrichtung und Seitenwände aufweist, und wobei die Seitenwände vom Bodenrost aus schräg nach oben aufeinander zu laufen, dass der Komposter im montierten Zustand derart auf der Tragvorrichtung gelagert ist, dass zwischen dem Bodenrost des Komposters und dem Erdboden auf dem der Komposter bei Verwendung des Komposters steht, ein Luftspalt ausgebildet ist, der sich entlang der gesamten Fläche des Bodenrosts erstreckt. Weiterhin wird ein Kompostersystem vorgeschlagen sowie ein Verfahren zur Kompostverarbeitung.

## Beschreibung

Die Erfindung betrifft einen Komposter gemäß dem Oberbegriff von Anspruch 1, ein Kompostersystem sowie ein Verfahren zur Kompostverarbeitung.

Komposter werden üblicherweise dazu verwendet, um Pflanzenabfälle aus Haus- und Garten gezielt wieder in Humus zu verwandeln. Dabei regelt die Natur ihren Pflanzenkreislauf normalerweise selber. Der Kompost der Natur verteilt sich allerdings - zumindest theoretisch - für alle Pflanzen gleich. Der Mensch möchte jedoch primär nur ganz bestimmte Pflanzen für z.B. Konsum oder Schönheit. Und das auch nur an ganz bestimmten Stellen, z.B. Felder oder Beete. Und dazu soll mehr nutzbare Menge auf kleinerem Raum entstehen, als jene, die in der normalen Natur entsteht.

Um das zu erreichen, muss man den Kompost der Umgebung auf einen Punkt konzentrieren - um die Chance zu erhalten, das Ergebnis, den Humus in Bezug auf Quantität und Qualität optimieren zu können.

Die Herausforderung ist, dass diese Optimierung noch nicht gut funktioniert - und der Status-Quo, das sich Abfinden mit sub-optimalen Lösungen, fest etabliert ist. Die Humus-Ernte ist mit heutigen Systemen und Verfahren suboptimal - und wird als normal, als gegeben, akzeptiert. Und daher kommt es zu einem Teufelskreislauf. Alle Problematiken hier aufzuzeigen würden den hiesigen Rahmen sprengen. Fakt ist jedoch, dass wohl mangels Ergebnis-Qualität, das Ergebnis eher "Fertig- Kompost" genannt wird - und Humus nur am Rande, als eines der Ergebnisse aufgeführt wird. Erwähnt wird Humus nur neben z.B. den durch Regen oder/und zu viel Feuchtigkeit oft aufgelösten und weggeflossenen - jedoch als Düngemittel extrem wichtigen - Stoffen, wie: Nitrate, Ammoniumsalze, Phosphate, Kalium- und Magnesiumverbindungen (s.a. Wikipedia, unter "Kompostierung"). "Fertig-Kompost" ist ergebnis-neutral. Mal hat man Glück, mal Pech.

Und Fakt ist auch, dass in keinem der Komposter-Vergleichs-Wettbewerben die Quantität und Qualität des jeweils erzielten Humus als Vergleichswert gemessen wird. Und auch nicht die Zeit und die Mühe, die hierzu investiert werden mussten. Und nicht zuletzt werden - wegen dem oft auftretendem Gestank und der langweiligen Ansicht dieser dunkelgrauen, grünen oder braunen "Bunker" - diese Konstruktionen in einer Gartenecke versteckt. Und es wird keine Mühe in eine gute Humusgewinnung investiert. Eher fährt man die eigenen Pflanzenreste zu einem Betriebshof - und kauft fremden, fertigen Humus im Baumarkt. Eine dopplete Ineffizienz (bzw. vielfache Ineffizienz, wenn man z.B. die Umweltschäden, Benzin- und Zeitvergeudungen dazurechnet).

Als zentralen Optimierungsaspekte wählte ich bekannte Variablen aus der Dynamischen Relativität ( E = m * z² - wobei sich im "z" auch die Formeln für Zeit und Raum - als solche - verbergen) von Albert Bright (s.a.: www.world-wide-wealth.com , Bücher: AstronZeitOnomie, AstronRaumOnomie und AstronEffizienzOnomie) - ich nun auf "irdische Aspekte" übersetzte. Z. B.:
1. "Energie" (im astronomischen Sinne: "Die "Kraft", etwas zu verrichten"). Was kann beim Kompostieren am besten als Ergebnis fungieren? Viel und guter Humus! Jetzt gibt es ein Ziel! Mit gutem Humus habe ich viel "Kraft", um gute Ernten zu erzielen. Was muss ich dafür, auf der rechten Seite der Gleichung tun? Materie, Raum und Zeit optimieren!
2."Materie". D.h.: was muss "investiert" werden an z.B. a) Kosten, b)Arbeiter-Einsatz, c) optimale Rotte-Kombination, d) Luft (Fäulnis-Misernte wegen Luft-Mangel bzw. Heu-Misernte wegen Luft- Überschuss), e) Wasser (zu viel z.B. Regenwasser oder Wasserstau: Fäulnis, bzw. zu wenig Feuchte: Austrocknung), usw.. Das "Materielle" führt durch die Entdeckung seiner maximal möglichen Energie seitens Albert Einstein ( E = m * c²) jedoch nur zu 5% der im All vorhandenen Kräfte. Wir haben uns deshalb auch mehr um andere Kräfte gekümmert, als um materielles Kurieren an Symptomen. 23% der Kräfte verursachen, dass die Planeten nicht so schnell fliegen können, wie sie sollten - und man vermutete eine Art Gravitation, weshalb man diese Kräfte "Dunkle Materie" nannte. Und 72% der Kräfte sorgen für das rapide Wachstum des Universums - und man nennt sie "Dunkle Energie". Eine zentrale Erkenntnis von Einstein haben wir in Punkto Materie dennoch bei unseren Überlegungen berücksichtigt: Jeder Planet optimiert selbst seine eigene Umlaufbahn um seinen Stern - und es ist nicht (wie noch Isaac Newton dachte) der Stern, der die Umlaufbahnen seiner Planeten bestimmt. D.h. Materie will ihren eigenen Weg gehen - und sollten nicht eingezwängt werden in zu engen, senkrechten Komposter-Boxen - übrigens auch nicht aus Erkenntnissen der Raum-Kräfte.
3. "Raum". Mit der Erfindung der Raum-Formel konnten die restlichen 95% an unbekannter Energie geklärt werden. Raum sollte daher auch bei einer neuen Art von Kompostern eine zentrale Rolle spielen - als Frei-Raum, für insbesondere Materie, wie Kompost, Humus, Luft, ...
4. Zeit. Wie schnell kommt die Ernte? Was kann getan werden, um den Prozess zu beschleunigen - ohne zu Lasten der Qualität zu gehen?

Multiplikatoren: z.B.: wie schnell kann man alle Aspekte an ein sich verändertes Umfeld wie: Jahreszeiten, Wetter, Sonne, Kompost-Art und -Menge, usw. anpassen? Was wirkt am meisten multiplikativ oder gar exponentiell? Hinzu kommt, dass alles mit allem korreliert. Alles ist dynamisch relativ. Alles muss als Ganzes im jeweiligen Umfeld betrachtet werden - und jeweils flexibel angepasst werden können.

In diesem Zusammenhang sind sowohl offene Kompostkasten als auch geschlossene Kompostboxen bekannt.

Grundsätzlich gilt: Der Kompost braucht Luft, um sich zu zersetzen. Für Kompost und Komposter braucht man Raum. Kompost braucht - und für Kompost braucht man - Zeit.

Nachteile der bisher bekannten offenen Kompostkasten hinsichtlich der genannten Aspekte:
- Luft: Am geeignetsten für Luft wären also offene Komposter mit Brettern oder Gittern als Wände. Hier a) wäscht jedoch der Regen wichtige Mineralien aus; b) die Sonne trocknet alles zu Heu; c) der Wind weht alles davon; d) lehmiger Boden führt zum Verfaulen des Kompostes; e) Fäulnis führt zu Geruchsbelästigung; f) durchrühren, um Fäulnis zu vermeiden, ist sehr anstrengend und schmutzig; g) ein Regendach ist teuer, windanfällig und nicht überall erlaubt. h) ) Keine Luftzirkulation in dem brisantesten Bereich, am Boden, in der Mitte.
- Raum: Der offene Kompost-Kasten ist das geräumigste System für den Kompost auf dem Markt. Es gibt jedoch viele Nachteile: a) Er braucht auch viel Raum im Garten, was Pflanzfläche und Schönheit reduziert, b) Und die meisten der unter "Luft" genannten Nachteile gelten auch hier. c) Kästen können nicht zur Sonne hin oder in den Schatten bewegt werden, was in Punkto Qualität und Zeit Nachteile bringt.
- Zeit: a) Keine Charge durchläuft in der gleichen Zeit die jeweils "geforderten" Aspekte der Zersetzung. Jeder der gefüllten Kästen weist eine suboptimale Mischung von Kompost in verschiedenen Stadien auf. b) In offenen Kästen dauert die Zersetzung länger, als in Thermo-Kompostern - und ist somit sich verändernden Witterungseinflüssen c) viel länger negativ ausgesetzt und d) viel direkter und e) fast ohne Eingriffsmöglichkeiten ausgesetzt. f) Man verbringt viel Zeit mit den Umwälzungen.
- Material und Konstruktion: Offener Kompost-Kasten. a) Oft sehr schlechte Qualität wodurch dieser Bereich des Gartens b) immer schäbig aussieht.

Nachteile der bisher bekannten geschlossenen Kompostboxen hinsichtlich der genannten Aspekte:
- Luft: Bei den sogenannten "Thermo-Kompostern" oder "Schnell-Komposter-Boxen" sind viele der offenen Kompost-Kasten-Probleme weg. Dafür gibt es hier a) einen Mangel an Luft, welcher so gravierend ist, dass in den Gebrauchstips eines Herstellers dieser offen zugibt, dass ein Umsetzen des Kompostes sehr angeraten wird, um ihn zu belüften. Andere Hersteller äußern sich hierzu gar nicht, was kein gutes Zeichen ist. Die jeweiligen Lösungen, um Luft zu integrieren überzeugen jedoch wenig. b) Kleine Luftlöcher sind oft verstopft oder c) trocknen Teile des Kompostes aus. d) Die Luftlöcher untergraben den propagierten Thermo-Effekt, da hieraus Wärme entflieht und Kälte eindringen kann. e) Es kann reinregnen bzw. Wind kann fließendes Regenwasser in die Luftlöcher drücken. f) Durch die große Konzentration von Kompost in geschlossenem Raum entwickelt sich Wärme, welche die Zersetzung vorantreibt, aber mangels Ablüftung entsteht auch viel Feuchtigkeit, welche die Mineralien im Kompost auswäscht und somit zu einem schnelles Ergebnis, aber mit reduzierter Qualität führt. g) Zu viel Feuchte führt auch leicht zum Verfaulen des Kompostes. h) Auch an Abstandshaltern verhaken sich Humusreste und unterbinden die geplante Luftzirkulation. I) Keine Luftzirkulation in dem brisantesten Bereich, am Boden, in der Mitte.
- Raum: Im Außenbereich wird der benötigte Raum auf ein Minimum reduziert, was positiv ist. Negativ-Aypekte sind: a) Im Inneren ist Raum eher Mangelware. b) die meisten der unter "Luft" genannten Box-Nachteile gelten auch für "Raum". c) Wenn im Raum dann aber auch noch Zwischen-Räume für verschiedene erdachte Funktionen benötigt werden, wird es noch enger in Punkto Raum und Ergebnis. Denn jede Kompost-Charge ist anders in der Zusammensetzung, Feuchtigkeit, Temperatur, usw. Keine Charge durchläuft in der gleichen Zeit die jeweils "geforderten" Aspekte der Zersetzung. Es entstehen Staus und Lücken - oder schlechtere Qualität. d) Thermo-Boxen sind teurer als offene Boxen. Daher werden oft e) zu kleine Boxen gekauft, f) diese Boxen extrem gefüllt, g) übriger Kompost gesondert entsorgt, h) Zum Teil wird aber auch in Betriebshöfen entsorgt, woraus sich i) Umweltverschmutzung ergibt. j) die meisten Boxen können nicht zur Sonne hin oder in den Schatten bewegt werden, was in Punkto Qualität und Zeit Nachteile bringt.
- Zeit: Boxen haben zeitlich gesehen einiges an Vorteilen. Nachteile sind a) Humusqualität sinkt durch Auswaschungen wegen Wärme-Feuchtigkeit und b) (potentielle) Stau-Feuchtigkeit. c) Der gewünschte Zeiteffekt durch Thermo-Boxen geht z.T. durch die offenen Luftlöcher und Spalten verloren.
- Material und Konstruktion: Meist bessere Qualität bei den Wänden. Aber a) oft schlechte Qualität der Verbindungen. b) Bricht eine Verbindung muss oft die ganze Wand oder der ganze Deckel neu gekauft werden. c) Bei der Humus-Entnahme aus den unteren Klappen sackt der darauf liegende Kompost runter und verhindert eine tiefere Entnahme. Mehrere Klappen an anderen Seiten helfen, aber tendenziell bleibt es ein Problem, da diese Klappen auch die Stabilität der Box schwächen. d) Zwischen-(Kästen-)- Konstruktionen sind oft labil. e) Die meist senkrechten Wände führen leicht zu Verkantungen von Kompost-Teilen und somit zu f) Verstauungen und zu g) Fäulnis, was h) unangenehm riecht. i) Mit Abdichtungslösungen/Patenten kuriert man nur am Symptom, nicht aber an den Ursachen.

In diesem Zusammenhang offenbart beispielsweise EP 2 397 456 A2 einen am Erdboden stehenden nach unten offenen Behälter mit einer unbelüfteten oberen Kammer, bei dem die Entnahme per Hand aus einer seitlichen Öffnung erfolgt.

WO 2012/139157 A1 offenbart einen Containerkomposter mit Zwischenboden und Lüftungssystem im Zwischenboden. Dabei lagert das Kompostmaterial auf dem Zwischenboden. Der Zwischenboden wird von Holmen gehalten.

EP 2 772 474 A2 offenbart einen vertikalen in ein Gebäude integrierten Komposter. Dabei wird der Kompost von einer oder mehreren Wohnungen über einen Einwurf in ein externes Rohr gegeben, in einem Container gesammelt und dort unter Rühren kompostiert.

EP 3 216 779 A1 offenbart einen Komposter mit gleitendem Deckel und Versiegelung, Ziel ist primär die Unterbindung von Gerüchen.

DE 4 314 786 C2 offenbart einen Komposter mit integriertem Auffangbehälter und verschiedenen Zugangsklappen. Dabei handelt es um eine senkrechte Kompost-Box mit einem in die Box inkludierten Auffang-Behälter.

DE 42 02 463 A1 offenbart einen Komposter mit konisch nach unten zugespitzter Bauweise, die einen sich ebenfalls nach unten verjüngenden Nachrotte- und Rückhaltebereich aufweist. Auch US 2011 0281 345 A1 offenbart eine Wurmfarm, bei der ebenfalls die Wände nach unten hin schräg auf einander zulaufen.

DE 296 09 734 U1 offenbart ein System aus übereinander stapelbaren Kompostierbehältern, bei dem die Seitenwände der einzelnen Kompostierbehälter, ebenso wie der Boden, mit Belüftungsöffnungen versehen sind.

DE 91 12 571 U1 offenbart einen Komposter mit einem Komposterboden und einem über diesem angeordneten Mantel. Der Komposterboden weist Komposter mit Belüftungskanälen

Die zentralen Mängel sind die Fokussierungen auf jeweils primär Einzelaspekte, ohne das Umfeld zu betrachten. Z.B.:

Es gibt viele Einzel-Lösungen, welche aber bei Betrachtung anderer Aspekte wieder Nachteile ergeben.

Ich musste neue - übergreifend wichtige - Aspekte finden, um möglichst viele Nachteile mit wenigen Aspekten zu lösen. Das Übergreifendste, was es gibt, ist Astronomie - und die Dynamik und Stärke der im Universum herrschenden Kräfte. Die Herausforderung war, dieser Kräfte auf eine irdische Herausforderung anzuwenden. Die unter A.3. dargestellten Mängel orientieren sich schon an der gewählten Übergreifenden Dimension.

Das Ziel unserer neuen Konstruktion war die Optimierung möglichst vieler Aspekte, welche zusätzlich möglichst miteinander multiplikative Wirkungen erzielen. Daher handelt es sich hier nicht um verschiedene Einzel-Patente, sondern um ein neues Gesamt-System und -Verfahren, wo alles mit allem korreliert und - je nach Umfeld, Anforderungen und Wünschen - alles angepasst werden kann bzw. muss. Unsere Lösung ist ein flexibles Baukasten-System und flexibles Baukasten-Verfahren für alle möglichen Varianten und Kombinationen von Aspekten zwecks flexibler Anpassung an variierende Umfeld-Aspekte - vom Klima bis hin zu Geschmack, um das Ziel, die Begeisterung für - und Optimierung von Quantität und Qualität der - Humus-Gewinnung, zu erreichen.

Vor diesem Hintergrund stellt sich die Aufgabe, einen verbesserten Komposter bereit zu stellen. Der Komposter soll mit einfachen Mitteln und kostengünstig herstellbar sowie möglichst einfach und unkompliziert in der Handhabung sein. Beispielsweise soll der Komposter eine möglichst einfache und vollständige Entnahme des entstandenen Humus ermöglichen und nach dem Einfüllen des Kompostmaterials möglichst ohne Zwischenschritte, wie etwa das Umsetzen, Wenden oder Umrühren des Komposts betreibbar sein, ohne dass es zu unerwünschter Geruchsbildung, Austrocknung, Rattenansammlung oder einer Verminderung der Qualität des entstehenden Humus kommt. Durch die technischen Konstellationen und Korrelationen untereinander soll ein schneller und kontinuierlicher Dauerkreislauf der Humus-Herstellung erfolgen.

Hauptmerkmale der Erfindung sind im kennzeichnenden Teil von Anspruch 1 sowie in Anspruch 13 und in den Ansprüchen 14 und 15 angegeben. Ausgestaltungen sind Gegenstand der Ansprüche 2 bis 12.

Vorgeschlagen wird ein Komposter wobei der Komposter einen Bodenrost oder Basis-Boden, und Seitenwände aufweist, dadurch gekennzeichnet, dass die Seitenwände vom Bodenrost aus schräg nach oben aufeinander zu laufen, dass der Komposter im montierten Zustand derart gelagert ist, dass zwischen dem Bodenrost des Komposters und dem Erdboden auf dem der Komposter bei Verwendung des Komposters steht, ein Luftspalt ausgebildet ist, der sich entlang der gesamten Fläche des Bodenrosts erstreckt.

Denkbar ist auch, dass der unter den Komposterwänden angeordente Bodenrost entsprechend dick und luftdurchlässig ausgebildet ist, wobei der Bodenrost dann direkt auf dem Erdboden aufliegen kann und dennoch ein entsprechender Luftspalt zwischen dem Erdboden und dem Kompostmaterial ausgebildet ist, das im Inneren des Komposters auf dem Bodenrost gelagert ist. Der Komposter kann außerdem eine Tragvorrichtung aufweisen. Dabei ist der Komposter beispielsweise derart auf der Tragvorrichtung gelagert, dass zwischen dem Bodenrost und/oder dem Basis-Boden des Komposters und dem Erdboden, auf dem der Komposter bei Verwendung des Komposters steht, ein Luftspalt ausgebildet ist. Die Tragvorrichtung kann auch als Basis-Gerüst bezeichnet werden. Durch die schräge Anordnung der Seitenwände hat der Komposter insgesamt eine konische Form. Dabei ist die Basis des Konus in Bodennähe und die Spitze vom Boden entfernt angeordnet. Mit anderen Worten: Die Seitenwände laufen nach oben schräg zusammen, so dass die Basis größer als die Einfüllfläche ist. Die Schrägung beträgt 75° oder weniger.

Der Boden des Komposters und damit der gesamte Komposter ist hochgestellt. Insbesondere ist derjenige Teil, der die Auflagefläche der Wände bildet hochgestellt. Insofern ist dann auch der Hauptkörper des Komposters hochgestellt. Außerdem ist der Boden als Bodenrost ausgebildet. Der Bodenrost kann auch auf oder in einem Rahmen arretiert sein, was dann als Basis-Boden bezeichnet werden kann. Unter einem Bodenrost wird dabei ein flächiger Gegenstand verstanden, der als Auflage für Material dienen kann, dabei aber Löcher aufweist, durch die Flüssigkeiten, Luft und - in Abhängigkeit von der Lochgröße - kleinere Partikel hindurchfallen können. Durch den Bodenrost kann auch seitlich Luft eindringen. Das Bodenrost ist über die gesamte Fläche luftdurchlässig. Der hochgestellte Komposter ist mithin von unten über seine komplette Fläche belüftet. Außerdem ist der Kompost, auf diese Weise gegen Ungeziefer, wie Ratten, geschützt.

Der Basis-Boden bzw. der Bodenrost hat ein Scharnier. Über dieses Scharnier ist der Basis-Boden oder Bodenrost mit wenigstens einer der Seitenwände verbunden, so dass er separat klappbar ist.

Ein solcher Komposter bietet insbesondere den Vorteil, dass der Kompost schnell und weit absacken und schrumpfen kann, dass die Wärme ohne seitliche Luftlöcher erhalten bleibt, dass es zu keiner Austrocknung durch Luftlöcher kommen kann, dass Fäulnis aus Aufstauungen durch z.B. Lamellen an den Innenwänden vermieden wird. Vorteilhaft ist dabei insbesondere, dass sich zwischen Kompost und Wänden des Komposters eine Luftschicht bilden kann. Es werden keine Feuchtigkeits- und/oder Lüftungsschlitze oder -löcher in den Wänden des Komposters benötigt. Weiterhin werden keine Hilfskonstruktionen (Lamellen etc...) im Inneren des Komposters benötigt. Ein weitere Vorteil liegt in der erhöhten Stabilität durch sich gegenseitig stützende Wände, insbesondere bei pyramidenförmiger Bauweise oder konischer Bauweise.

Man erkennt insofern, dass der Komposter pyramidenförmig oder kegelförmig sein kann, weitere Mischformen sind denkbar. Beispielsweise kann die Grundfläche kreisförmig oder polygonal, bevorzugt quadratisch sein. Aus der nach oben konisch zulaufenden Geometrie ergibt sich als weiterer Vorteil, dass der Gewichtsschwerpunkt des Komposters sich in der Nähe des Bodens befindet, dadurch ist der Komposter gut kippbar. Insbesondere ist der Komposter auch gut rückkippbar. Dabei verlagert sich das Gewicht beim Kippen zusätzlich auf die Scharniere, d.h. der obere Teil muss kaum "abgefangen" werden und der untere Teil wird mit jedem Kipp-Grad immer leichter.

Denkbar ist dabei beispielsweise, dass der Komposter ein Fundament aufweist, auf dem der Bodenrost bzw. Basis-Boden und die darüber platzierten Seitenwände angeordnet sind. Das Fundament kann beispielsweise ein Balkenfundamt und/oder Grundfundamt sein. Dieses Fundament kann mit dem Basis-Boden durch ein oder mehrere Scharniere verbunden sein, wodurch das Kippen des Komposters mit Basis-Boden erleichtert und stabilisiert wird. Auch dieses Fundament muss jedoch erhöht aufgestellt werden bzw. Lüftungslöcher aufweisen, damit eine Durchlüftung des Bodenrostes optimal erfolgen kann.

Denkbar ist des Weiteren, dass der Basis-Boden mit einem höheren Gerüst für den Bodenrost ausgestattet wird und auch hier, an diesem Gerüst, Lüftungslöcher vorgesehen werden. Das Gerüst kann beispielsweise ein Balkengerüst sein.

In einer weiteren Ausgestaltung, kann der Komposter auf Rädern stehen. Auf diese Weise kann der Komposter je nach Bedarf in die Sonne oder in den Schatten bzw. zum oder weg vom Wind gerollt werden. Günstig ist es dabei, wenn die Räder bremsbar sind. Auf diese Weise kann der Komposter beispielsweise beim Kippen nicht wegrollen.

In jedem Fall ist es von Vorteil, wenn der Komposter plastikfrei ist. Um Kippanforderungen und Nachhaltigkeitsaspekten Rechnung zu tragen sollte der Komposter jedoch eher in hochwertigen Materialien konstruiert werden.

Besonders vorteilhaft ist es, dass der Bodenrost gegenüber den Seitenwänden verkippbar ist. Auch im Fall einer Ausgestaltung als Basis-Boden wie oben beschreiben kann der Bodenrost oder Basis-Boden gegenüber den Seitenwänden verkippbar sein. Außerdem ist der Bodenrost oder Basis-Boden gegenüber der Tragvorrichtung bzw. dem Fundament verkippbar. Mit anderen Worten der Bodenrost oder Basis-Boden ist doppelt verkippbar. Beispielspielsweise kann das Bodenrost oder Basis-Boden mit Hilfe eines oder mehrere Scharniere mit einer der Seitenwände verbunden sein. Gleichzeitig kann das Bodenrost oder Basis-Boden auch über wenigstens ein Scharnier mit der Tragvorrichtung verbunden sein. Besonders bevorzugt ist dabei, wenn das wenigstens eine Scharnier, mit dem das Bodenrost oder Basis-Boden mit der Tragvorrichtung verbunden ist, auf der gleichen Seite des Komposters angeordnet ist, wie die Seitenwand, die ebenfalls mit einem oder mehreren Scharnieren mit dem Bodenrost oder Basis-Boden verbunden ist. Auf diese Weise können beispielsweise der von den Seitenwänden und dem Bodenrost oder Basis-Boden umschlossene Komposterbehälter in einem ersten Schritt gegenüber der Tragvorrichtung zur Seite verkippt werden. Dabei hält das Bodenrost oder Basis-Boden das in dem Komposterbehälter enthaltene Material zurück. Mit anderen Worten: Das Bodenrost oder Basis-Boden dient als unterer Deckel, wenn der Komposter auf die Seite gelegt wird. Zum Öffnen dieses unteren Deckels kann dann der Bodenrost oder Basis-Boden weggeklappt werden. Dabei kann der Bodenrost oder Basis-Boden beispielsweise auf die Tragvorrichtung geklappt werden. Nach dem Öffnen kann dann der Humus, der sich über der Bodenfläche des Komposterbehälters gebildet hat, entnommen werden. Insbesondere kann dabei auch der Humus, der sich in der Mitte der Bodenfläche gebildet hat entnommen werden.

Man erkennt, dass es günstig sein kann, wenn der Bodenrost oder Basis-Boden einen Haltemechanismus aufweist, der den Bodenrost beim Umkippen des Komposters an den Seitenwänden des Komposters festhält. Dabei kann es sich beispielsweise um einen Verschlusshaken oder dergleichen handeln. Auch beim Zurückkippen des Komposters nach der Entnahme des Materials hält der Haltemechanismus den Bodenrost oder Basis-Boden entsprechend fest. Eine entsprechende Arretierung des Bodenrosts ist günstig, um das Kompostmaterial und den entstandenen Humus beim Kippen des Komposters im Komposter zu halten. Erst wenn der Komposter auf der Seite liegt, wird der Haltemechanismus des Bodenrosts oder Basis-Boden gelöst und der Bodenrost oder Basis-Boden weggeklappt, so dass, wie bereits oben beschrieben, eine Öffnung entsteht aus der der gebildete Humus (unterste Schicht des im Komposter enthaltenen Materials) abgeschaufelt werden kann. Insgesamt bietet dies den großen Vorteil, dass eine Entnahme von Humus möglich ist, ohne dass noch nicht vollständig kompostiertes Material nachrutscht. Außerdem ist der komplette Humus, auch der Humus in der Mitte des Komposters, zugänglich und kann genutzt werden.

In jedem Fall ist es besonders vorteilhaft, dass der Bodenrost ein Gitterrost ist. Ein solches Gitterrost ist besonders gut luftdurchlässig. Denkbar ist dabei beispielsweise dass das Bodenrost aus mehreren übereinandergestapelten Schichten von Gittern unterschiedlicher Maschengrößen besteht. Dabei kann der Bodenrost auch integrierte Stützstreben aufweisen. Denkbar ist auch dass der Bodenrost auf diese Weise als zusätzliches Sieb für besonders feinen Humus fungiert. Nach dem Umkippen des Komposters und Zurückklappen des Bodenrosts wie oben beschrieben, kann nämlich beispielsweise der Humus zunächst auf das Zurückgeklappte Bodenrost geschaufelt werden. Dort kann der Humus wie durch ein Sandsieb durch das Gitterrost gestrichen werden, so dass sich unterhalb des Bodenrosts, beispielsweise zwischen Bodenrost und Tragvorrichtung, besonders feiner Humus ansammelt. Dieser kann beispielsweise direkt für Blumentöpfe in Wohnungen verwendet werden.

In einer alternativen Ausführungsvariante kann vorgesehen sein, dass der Bodenrost durch eine Anordnung drehbarer Nagelstangen gebildet wird. Die Nagelstangen sind dabei beispielsweise Holzstangen, in die ringsum und über die gesamte Länge Nägel eingeschlagen sind. Denkbar sind auch Stahlstangen oder Rohre, in oder an welchen Schrauben oder Stahlstangen, wie Nägel befestigt, z.B. angeschweißt sind. Die Nagelstangen sind dabei so angeordnet, dass die Zwischenräume zwischen den Nägeln benachbarter Nagelstangen ebenfalls eine Art Rost bilden. Dabei sind die Nägel benachbarter Nagelstanden jeweils nebeneinander, jedoch etwas versetzt zu den gegenüberliegenden Nägeln angeordnet. Mit anderen Worten: Die Nagelstangen bilden eine Auflage für das Material im Komposter. Auch hier ist der Bodenrost entsprechend vollflächig belüftbar. Ein solcher Bodenrost mit Nagelstangen ist besonders günstig, wenn der Komposter sehr groß ausgebildet ist und ein entsprechend sehr großes Volumen von Kompostmaterial fast. Ein solches großes Volumen geht mit einem entsprechend hohen Gewicht einher. Der Vorteil des Bodenrosts mit drehbaren Nagelstangen ist dann, dass der Komposter zur Entnahme des entstandenen Humus nicht mehr im Ganzen gekippt werden muss. Stattdessen können die Nagelstangen mit einer Kurbel oder maschinell bedienbar sein. Dabei kann jede Nagelstange einzeln drehbar sein. Denkbar ist auch, dass die Drehung zwei oder mehrere Nagelstangen aneinander gekoppelt ist. Bei Drehen der Nagelstangen fällt dann das auf den Nagelstangen gelagerte Material, also der frisch gebildete Humus, aus dem Komposter und kann auf diese Weise entnommen werden.

Denkbar sind auch Kombinationen aus beiden Bodenrost-Arten. Beispielsweise kann der Komposter ein Gitterrost als Bodenrost aufweisen, das an den Seitenbereichen von Nagelstangen flankiert ist. Insbesondere kann das Gitterrost in der Mitte des Bodenrosts ausgebildet sein. Links und rechts, sowie vorne und hinten des Gitterrosts können dann Nagelstangen ausgebildet sein. Die Nagelstangen können wie oben beschrieben drehbar sein. Dies bietet beispielsweise den Vorteil, dass die Nagelstangen das auf dem Bodenrost liegenden Kompostmaterial auflockern können, indem das Material in den Seitenbereichen mit Hilfe der Nagelstangen beweget und aus dem Komposter gekurbelt wird.

In jedem Fall ist es besonders günstig, dass die Seitenwände geschlossene Flächen sind. Die Seitenwände weisen keine Löcher, Entnahmeklappen, Belüftungsschlitze oder ähnliches auf. Günstig ist es auch, dass der Komposter eine Deckelklappe aufweist. Die Deckelklappe kann Klemmelemente aufweisen. Außerdem kann ein Haken zum Aufhängen des Deckels an der Seitenwand des Komposters vorgesehen sein. Vorteilhaft ist dabei, dass der Deckel schräggestellt werden kann. Dies ist insbesondere zur Belüfung unter Ausnutzung der natürlichen Winde vorteilhaft.

Denkbar ist auch, dass die Tragvorrichtung und oder der Basis-Boden eine oder mehrere Bodenklappen aufweist. Diese Bodenklappen können die Luftlöcher in der Tragevorrichtung, in dem Basis-Boden bzw. den Raum unter der Tragevorrichtung, wenn die Tragevorrichtung mittels Rädern oder z.B. Steinen/Platten höhergestellt wurde, abdichten.

Mit anderen Worten: Solche Bodenklappen können gemeinsam mit dem Deckel die Belüftung des Komposters regulieren. Beispielsweise kann mit Hilfe einer solchen Bodenklappe gesteuert werden, aus welcher Himmelsrichtung die Belüftung des Bodens erfolgt.

In weiteren Ausführungsformen kann beispielsweise vorgesehen sein, dass an der Außenseite wenigstens einer Seitenwand eine Stützvorrichtung angebracht ist. Idealerweise ist die Stützvorrichtung an der Wand in deren Richtung der Komposter normalerweise gekippt wird ausgebildet. Eine solche Stützvorrichtung kann die Form einer "Schwenkklappe" haben und stützt den Komposter in der gekippten Position. Auch ist es vorstellbar, dass der Komposter Handhabungselemente aufweist. Beispielsweise können an der Außenseite und/oder am Basis-Boden Griffe zur besseren Handhabung angebracht sein. Vorstellbar ist auch ein Seilzug, mit dem der Komposter gekippt werden kann.

In jedem Fall ist es besonders günstig, wenn die Seitenwände untereinander mit Hilfe von Schienen gehalten werden, die sich über die gesamte Länge der jeweiligen Seitenwand erstrecken. Mit Hilfe solcher Verbindungsschienen können die Seitenwände einzeln nach Art eines Baukastens montiert werden. Besonders vorteilhaft an einer solchen Verbindung ist, dass die Verbindung nicht punktförmig sondern flächig ist. Das führt zu erhöhter Stabilität und gleichmäßigerer Verteilung der Haltekräfte. Beispielsweise bilden die Schienen eine Steckverbindung für die Seitenwände. In einer besonders bevorzugten Ausführungsform, sind die Montageschienen zweilagig ausgebildet mit einer äußeren Winkelschiene und einer inneren Winkelschiene, die punktuell miteinander verbunden sind und zwischen deren Schenkel jeweils ein Spalt ausgebildet ist, in den die jeweilige Seitenwand eingesteckt wird. Nach dem Einfügen der zwei zu arretierenden Wandseiten werden z.B. die Schrauben/Muttern der Verbindungspunkte der Schienen festgedreht, um so die Wände zu halten und stabilisieren.

Alternativ ist auch denkbar, dass die innere Winkelschiene keine Schiene ist sondern ein Teleskoprohr mit rundem oder eckigem Durchmesser ist. Die Steckverbindung kann auch durch ausziehbare Stangen gebildet werden. Die Seitenwänden können entsprechend durch das Einsetzen von zusätzlichen Brettern ebenfalls vergrößert werden. Dabei kann ein Verbindesystem zum Aufstocken der Wände in die Wände integriert sein. Auch ist vorstellbar, dass dabei in den Stangen eine zusätzliche Belüftung integriert ist. Dies kann insbesondere bei besonders großen Bauformen vorteilhaft sein. Die schräg ausgerichteten Stangen, welche die Seitenarretierungen der Komposterwände bilden, können auch untereinander horizontal (oben , mittig oder/und unten) oder/und als Kreuz (dann auch in der Mitte stabilisierend fixiert) verbunden werden. Damit entsteht eine Gerüst mit eigener zusätzlicher Stabilität, an welches die Wände, Deckel und Böden arretiert werden. Diese Ausgestaltung ist insbesondere für größere Komposter ideal.

In noch einer alternativen Ausführungsform können die Schienen auch einstückige Formen bspw. als Gussform sein. In jedem Fall können die Seitenwände in gleichen oder verschiedenen Farben gestaltet sein.

In einer weiteren Ausführungsform ist vorstellbar, dass wenigstens die Seitenwände als einstückiges Faltstück ausgebildet sind, bevorzugt der Bodenrost, die Seitenwände und die Deckelklappe, besonders bevorzugt alle Bauteile des Komposters. Auch etwaige weiter Flächenteile des Komposters können als Faltteile addiert werden.Eine solche Ausführungsform ist besonders leicht zu transportieren und platzsparend zu lagern, wenn sie nicht in Gebrauch ist. Solche Faltstücke können flach übereinander gestapelt werden. Mit anderen Worten, ein im nicht montierten Zustand als Faltstück ausgebildeter Komposter ist einfach zu montieren, kann in großen Mengen flach übereinander liegend gestapelt werden und ist somit gut und in großen Mengen transportierbar. Erst am Einsatzort werden sie dann, ähnlich wie ein Pappkarton, in ihre dreidimensionale Form gefaltet. Nach dem Zusammenfalten kann der Komposter dann wie oben beschrieben ausgestaltet sein. Ein weiterer Vorteil entsprechender Faltstücke ist, dass sie einfach herstellbar sind. Beispielsweise kann das Faltstück durch Techniken wie etwa stanzen, sägen, lasercut etc. hergestellt sein.

In einer weiteren Ausführungsform kann in jedem Fall vorgesehen sein, dass an der Deckelklappe oder im oberen Bereich des Komposters ein oder mehrere Lufttrichter ausgebildet ist oder sind. Der schmale Teil des Lufttrichters kann dabei direkt oder indirekt, beispielsweise mit Hilfe eines Schlauchs, in den Komposterraum hineinragen. Der Lufttrichter kann eine Windklappe aufweisen. Außerdem kann der Lufttrichter schwenkbar sein. Denkbar ist auch, dass der Lufttrichter über einen Schlauch mit dem Inneren des Komposters verbindbar ist. Anstelle des Schlauchs oder in Ergänzung zu dem Schlauch kann auch ein Luftrohr vorgesehen sein. Das Luftrohr kann dabei durch den Deckel in den Komposter und in den Kompost eingefügt sein.

Weiterhin ist es günstig, wenn an den Seitenwänden und/oder an der Deckelklappe abnehmbare Dämmplatten montiert sind. Auch an den Lüftungsklappen können abnehmbare Dämmplatten montiert sein. Je nach Temperatur können diese Dämmplatten angebracht oder abgenommen werden. Sie dienen insofern als zusätzliche Regulationsmöglichkeit der Kompostertemperatur.

In einem weiteren Aspekt wird ein Kompostersystem vorgeschlagen mit einem Komposter, wie zuvor beschrieben und mit einer Nachfüllvorrichtung für Mutterboden. Die Nachfüllvorrichtung kann als eine Art Spritze gestaltet sein. Sie weist bevorzugt einen zylindrischen Hohlkörper auf, der ein vorderes Ende und ein hinteres Ende aufweist. Am vorderen Ende kann beispielsweise ein Dorn ausgebildet sein, der mit einer Stange verbunden ist, die durch den Hohlkörper hindurch und am hinteren Ende des Hohlkörpers hinausragt. An der Stange kann auch eine Scheibe angebracht sein, deren Form und Durchmesser im Wesentlichen der Form und dem Durchmesser des Hohlkörpers entspricht. Die Scheibe kann auf der Stange verschiebbar gelagert sein. Die Scheibe kann eine Führungsstange aufweisen, mit deren Hilfe die Scheibe vom hinteren Ende des Hohlkörpers zum vorderen Ende des Hohlkörpers geschoben werden kann. Zum Nachfüllen von Mutterboden kann eine entsprechende Menge Mutterboden in den Hohlkörper gefüllt werden. Dann wird die Vorrichtung mit dem Dorn voran in das bereits im Komposter befindlichen Kompostmaterial geschoben. Ist die gewünschte Tiefe im Kompostmaterial erreicht, wird der Mutterboden mit Hilfe der Scheibe aus dem Hohlkörper hinausgedrückt und auf diese Weise in das Kompostmaterial eingebracht. Man erkennt, dass auf diese Weise Mutterboden von oben durch die Deckelklappe bis in die tiefen unteren Schichten des Kompost nachgefüllt werden kann, ohne dass der Komposter gekippt werden muss. Dies ist besonders günstig bei sehr großen und schweren Kompostern, insbesondere bei Kompostern, deren Bodenrost als Nagelstangenanordnung ausgebildet ist, die nicht weggeklappt wird.

Anstelle von Mutterboden können auch verschiedene Materialien oder Würmer zur Beschleunigung der Kompostierung eingesetzt werden.

In noch einem weiteren Aspekt wird ein Verfahren zur Kompostverarbeitung mit Hilfe eines zuvor beschriebenen Komposters vorgeschlagen, wobei das Verfahren die Schritte aufweist:
a. Bereitstellen eines Komposters,
b. Einfüllen einer dünnen Schicht von Kompost aus Blätter oder Gras, welche das Wegsacken des im nachfolgenden Schritt einzufüllenden Mutterbodens verhindert
c. Einfüllen von Mutterboden in den Komposter als zweite Schicht,
d. Einfüllen von Kompostmaterial,
e. Abwarten des Kompostierungsvorgangs bis zumindest in der untersten eingefüllten Schicht Humus entstanden ist,
f. Kippen des gesamten Komposters, so dass er auf einer der schrägen Seiten liegt
g. Aufklappen des Bodenrosts oder Basis-Boden,
h. Entnahme des entstandenen Humus,
   i.
i. Zuklappen des Bodenrosts oder Basis-Boden,
j. Wiederaufstellen des Komposters,
k. Wiederholung der Schritte d. bis j..

Das Einfüllen des Mutterbodens erfolgt bei der ersten Befüllung bevorzugt bei geöffneter Deckelklappe und aufrechtstehenden Komposter. Bei Bedarf kann dieser Schritt auch vor dem Zuklappen des Bodenrostes erneut ausgeführt werden. Dann wird der Mutterboden einfach in den geöffnet auf der Seite liegenden Komposter hineingeschaufelt.

Das Entnehmen des Humus entsprechend Schritt h. kann dabei beispielsweise mit einer Schaufel in eine danebenstehende Box erfolgen, um diesen etwas groberen Humus zum Düngen im Garten zu nutzen. Alternativ kann der Humus auch mit einer Schaufel auf das daneben aufgeklappte Bodenrost geschaufelt werden, wobei unter dem Bodenrost beispielsweise eine darunter stehenden Box angeordnet sein, um dann mit z.B. der Schaufel auf den Humus zu klopfen, damit dieser gesiebt wird. Dabei wird sehr dünner Humus erhalten, der dann für z.B.Blumenerde für Blumentöpfe im inneren Wohnungsbereich genutzt werden kann. In jedem Fall können dann nach der Entnahme des Humus gröbere Resten wie z.B. Zweigen in den offen liegenden Komposter zurückgeschaufelt werden, um weiter zersetzt werden zu können. Je nach Bedarf kann auch in einem weiteren Schritt nach der Entnahme des Humus noch ein Nachfüllen von Muttererde in den offen liegenden Komposter erfolgen, falls man zu viel Humus entnommen haben sollte.

Auch wird ein Verfahren zur Kompostverarbeitung mit Hilfe eines Kompostersystems vorgeschlagen, wobei das Verfahren die Schritte aufweist:
a. Bereitstellen eines Komposters,
b. Einfüllen einer dünnen Schicht von Kompost aus Blätter oder Gras, welche das Wegsacken des im nachfolgenden Schritt einzufüllenden Mutterbodens verhindert
c. Einfüllen von Mutterboden in den Komposter als zweite Schicht
d. Einfüllen von Kompostmaterial
e. Abwarten des Kompostierungsvorgangs bis zumindest in der untersten eingefüllten Schicht Humus entstanden ist,
f. Entnahme des entstandenen Humus,
g. Optional nachfüllen von Mutterboden mit Hilfe der Nachfüllvorrichtung,
h. Wiederholung der Schritte d. bis g.

Ein solches Verfahren kann sowohl mit Hilfe eines Komposters, der ein Gitterrost als Bodenrost aufweist, als auch mit einem Komposter, dessen Bodenrost von drehbaren Nagelstangen gebildet werden, durchgeführt werden. Die Nachfüllvorrichtung erlaubt dabei, wie oben beschrieben das Einbringen des Mutterbodens von oben in den bereits mit Kompostmaterial gefüllten Komposter.

Besonders vorteilhaft ist es auch, dass der Komposter als Baukastensystem mit technisch jederzeit erweiterbarem oder verkleinerbarem Innenvolumen ausgebildet ist. Dabei ist der Innenraum in jedem Fall ein nicht aufgeteilter Innenraum. Mit anderen Worten es sind weder mehrere Kammern noch Trennböden oder dergleichen im Innenraum vorgesehen. Durch die Ausgestaltung als Baukastensystem ist der Innenraum dennoch veränderbar. Beispielsweise dadurch, dass die Verbindungsschienen in der Länge variabel gestaltet werden können (wie etwa ein Teleskopsystem. Auch die Grundform kann dabei variabel angepasst werden. Gleiches gilt für weitere Ausstattung, wie beispielsweise Wände, Deckel, Boden, Gerüste, Räder und dergleichen.

Insofern betrifft ein weiterer Aspekt auch ein Baukastenverfahren, wo die ursprünglich genutzte Form bzw. Ausstattung, d.h. Wände, Deckel, Boden, Gerüst, Räder und dergleichen, jederzeit veränderbar ist. Alle Teile können als Bausatz- und auch als nachträgliche Bausatzergänzungen, sowie als Einzelteile geliefert werden.

Insgesamt bietet der vorliegende Komposter also eine Vielzahl von Vorteilen gegenüber dem bisher bekannten Stand der Technik, beispielsweise:
- erhöht auf z.B. Füßen oder Balken stehend
- Unsere Humus-Box hat ein Boden-System
- in unserer Humus-Box wird die gesamte Kammer belüftet
- der "vertikale" Schacht ist bei unserem Modell schräg, sich nach unten öffnend
- unsere untere Abgrenzung sind keine luftundurchlässige Platte
- unser System hat nur eine Kammer. Diese ist für Luft (rein) und Wasser (raus) offen (Löcher oder Gitter). Sie hält aber Kompost und Humus zurück. Sie wird von unten und nicht von der Seite belüftet, weshalb sich in der Kompost-Mitte keine Fäulnis ergeben kann
- g - I) Unser System braucht keine - nie eindeutig absehbare - Zwischen-Schwenkung und Schiebungen, um das roh- oder halb-fertige Material in eine weitere Kompostierungsphase zu transportieren. Der fertige Humus wird bei unserem System kontinuierlich(!) herausgeschaufelt - und bestehende Rotte kann kontinuierlich(!) nachsacken, um zu Humus zu gedeihen - und neuer Kompost kann kontinuierlich(!) nachgefüllt werden
- Ein Container hat senkrechte Wände - unser System ist konisch, sich nach unten öffnend
- unser Boden ist kein Zwischen- sondern ein End-Boden um Humus und (dadrüber) Kompost aufzufangen und ist nicht eingezwängt in einem Container
- c , d und e) statt eines künstlichen Lüftungssystems nutz unser System die Frischluft und den Wind direkt in der Natur
- da unser System in der Natur steht brauchen wir keinen Flüssigkeits-Auffangbehälter. Die Flüssigkeit aus dem Kompostier- und Hums-Generierungsprozess tropft direkt durch unser- Bodensystem mit Gitter bzw. Brett mit Löchern auf den Mutterboden
- Unser Zwischen und zugleich End-Lagerungs-Böden sind stabil und braucht keine zusätzlichen Grund-Stützen
- Unsere Technik ist ausgefeilt genug, sodass keine künstliche, maschinelle Zusatz-Lüftung erforderlich ist, wie sie in einem großen abgeschlossenen Container mit viel Kompostmasse erforderlich ist
- Unser System ist konisch
- einzeln, autonom stehend
- Primär Garten-Kompost und Bio-Abfall wird gesammelt
- Einwurf über simple Klappe direkt in den Komposter (ohne Rohr) -
- Kompost landet auf frei stehendem Boden-Abschluss-System, über welches auch der fertige Humus vom Rest-Kompost separiert werden kann. Die Separierung wird im o.g. Patent gar nicht dargestellt, was bei ständig neu obenauf landenden Abfällen ein großes Problem sein sollte.
- Kompost braucht in unserem Komposter nicht aufwendig mit Maschine gewendet zu werden. Er zersetzt sich automatisch (bei Beimischung von Muttererde oder
- "Schnellkomposter"), da es sich primär um Garten-Kompost handelt, welcher nicht so feucht ist, wie Lebensmittelabfälle von Hausmüll. Insbesondere durchlüftet unser System besser -
- Die Luftversorgung erfolgft bei unserem System automatisch. Im anderen Patent muss eine Aufwendige Belüftung erfolgen, das der Hausmüll feuchter und das Gerät isoliert im Keller steht, ohne automatische Luftzufuhr.
- Feuchtigkeit läuft bei unserem System automatisch ab über Löchen in der Bodenplatte oder Boden-Gitter. Feuchtigkeit wird auch durch automatische Belüftung reduziert
- Mit unserem Patent verändern wir viele Aspekte. Wir nutzen einen Klapp-Deckel, der mit obigem Patent nicht zu tun hat.
- unser Patent hat einen Kipp-Deckel
- Die primär Gerüche, die vermieden werden sollen, werden bei unsere System kaum entstehen, da feuchtigkeit abtropfen kann und genügend gelüftet wird
- konische Kompost-Box
- Kein spezieller Auffang-Behälter
- keine Inklusion vom Behälter.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1:: Typ 1 als eine mögliche eckige Ausgangsbasis
- Fig. 2:: Typ 2 als eine mögliche runde Ausgangsbasis
- Fig. 3:: Typ 3 als eine mögliche Kombination aus eckig und rund als Ausgangsbasis
- Fig. 4:: Typ 4 als ein möglicher Bausatz mit dreidimensionalen Fertig-Bauteilen als Einzelteile
- Fig. 5:: Einfaches Eck-Verbindungselement an Innenseiten-Ecke, welches 2 Wände verbindet.
- Fig. 6:: Einfaches Eck-Verbindungselement einzeln dargestellt
- Fig. 7:: Einfaches Flächen-Verbindungselement als Platte für 2-D-Flächenerweiterungen
- Fig. 8:: Doppelwandige Ecken-Verbindungs-Leiste senkrecht dargestellt
- Fig. 9:: Doppelwandige Ecken-Verbindungs-Leiste waagerecht dargestellt
- Fig. 10:: Doppelwandige Flächen-Verbindungs-Leiste waagerecht dargestellt
- Fig. 11:: Doppelwandige Kannten-Verstärkungs-Leiste waagerecht dargestellt
- Fig. 12:: Bereits bei Produktion integriertes Wände-Verbindungs-System für längliche oder/und höhenmäßige Wand-Vergrößerung
- Fig. 13:: Bereits bei Produktion integriertes Wände-Verbindungs-System für Wand-Verbindung über Eck verlaufend.
- Fig. 14:: Unter-Ansicht vom Deckelsystem mit Stahlspangen-System
- Fig. 15:: Arretierungs-System am Deckel der Humus-Box
- Fig. 16:: Arretierungs-System an der Oberkannte der Innenseite der Humus-Box
- Fig. 17:: Seitenwände an Deckel-Unterseite
- Fig. 18:: Boden als Gitter mit Gerüst und Stützeisen
- Fig. 19:: Boden als durchlöchertes Holz- oder Kunststoff-Brett
- Fig. 20:: Scharnier-Arretierung von Humus-Box und Humus-Box-Bodenplatte
- Fig. 21:: Klappblech/Ösen-Schließ-Mechanismus
- Fig. 22:: Räder als Roll-/Dreh-/Blockierungs- sowie als Erhöhungs-System
- Fig. 23:: Arretierung an Balken-Fundament als Erhöhungs-System
- Fig. 24:: Klappensystem zur Wind-Abschirmung/Feuchthaltung bei Räder-System
- Fig. 25:: Klappensystem zur Lüftung/Trocknung bei Räder-System
- Fig. 26:: Stufen-Arretierungsblech
- Fig. 27:: Klappensystem zur Windabschirmung oder Durchlüftungsförderung bei Balken-Gerüst
- Fig. 28:: Schwenk-Klappen-System zur Positionshaltung der Humus-Box bei Humus-Ernte
- Fig. 29:: Außenwand waagerecht gekippt, Boden schräge, Schwenk-Klappe senkrecht
- Fig. 30:: Rohrsystem
- Fig. 31:: Doppel-Rohr-System
- Fig. 32:: Lufttrichter - am Deckel arretiert und ausrichtbar
- Fig. 33:: Lufttrichter - am Deckel arretiert und mit Wind-Fahne sich automatisch ausrichtend
- Fig. 34:: Dämmplatten für Seiten
- Fig. 35:: Dämmplatte für Deckel
- Fig. 36: schematische Ansicht von drei Gitterplatten, die übereinandergestapelt ein Gitterrost, das als Bodenrost dienen kann, bilden können,
- Fig. 37: eine schematische Darstellung einer Verbindungsschiene zur Montage der Seitenwände,
- Fig. 38: eine weitere schematische Darstellung einer Verbindungsschiene zur Montage der Seitenwände, wobei ein Teil der Verbindungsschiene als Rohr ausgebildet ist,
- Fig. 39: schematische Ansicht eines Bodenrost, bei dem das Bodenrost aus Nagelstangen gebildet ist,
- Fig. 40: schematische Ansicht eines als Faltstück ausgebildeten Komposters im nicht montierten Zustand.

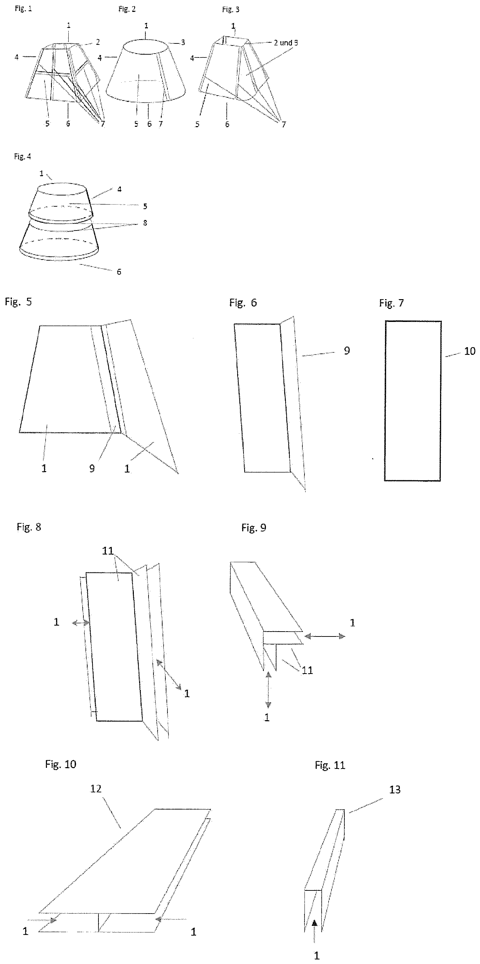

Fig. 1, Fig. 2, Fig. 3 und Fig. 4 zeigen zum einen, dass es bei dieser Patentanmeldung um die geschlossene Box-Varianten bei der Optimierung von Humus-Generierungs-Lösungen geht. Dadurch erreicht die Lösung gegenüber den Offene-Kästen-Varianten mehr Humus und eine bessere Humus- Qualität, weil der Humus bei offenen Systemen durch Regenwasser ausgelaugt wird, sowie durch Sonne und Wind viel Kompost vertrocknet und nicht zu einem qualitativen Humus wird.

Zum anderen wird klar, dass als Seiten-Umhüllungs-Flächen/Wände 1 verschiedenste geometrische Formen möglich sind und dass die Erfindung auch eine Kombination von Formen ermöglicht, wie hier in einer exemplarischen Auswahl dargestellt: eckig: Fig. 1, Pfeil 2; rund: Fig. 2, Pfeil 3 ; eckig und abgerundet: Fig. 3, Pfeile 2 und 3. Denn es handelt sich bei der Erfindung um ein Baukasten- System und nicht mehr um nur vordefinierte, nicht anpassbare Humus-Box-Typen. Durch die Vielfalt und Variabilität in Form und Farben soll die Humus-Gewinnung mehr Freude machen und nicht nur ein schlecht aussehender Müllbereich in bestenfalls grün oder dunkelgrau und in der allerletzten Ecke sein.

Hinzu kommt, dass die Wetter- und Klima-Aspekte sehr variabel sind. Und mit dieser Variabilität sind auch der Kompost und die Humusernte je nach Wetter sehr variabel in Punkto Menge (Ernte, Garten- Neugestaltung, ...) und Qualität (feucht, trocken, ...). Man hat häufig zu groß oder zu klein gekauft oder eine inadäquate Box für die jeweilige Jahreszeit - und kann dieses bei starren Modellen nicht optimieren.

Des Weiteren wird klar, dass die Erfindung eine konische 4 Formgebung verfolgt. Die Schrägung ist hierbei flacher (maximal 75 Grad oder weniger) als bei bestehenden Lösungen (ca. 80 Grad oder mehr). Dieses Mehr an Schrägung erfolgte aus verschiedenen Gründen: A) Die existierenden schrägen Formen (mit nach unseren Recherchen maximal ca. 80 Grad flachem Schrägungsgrad) - und erst recht Formen mit senkrecht verlaufenden Wänden - haben durchaus Probleme bei der Durchlüftung. Denn der Kompost kann hier nicht (so schnell) so (weit) absacken oder schrumpfen, dass sich zwischen dem - durch Verrottung - absackendem/schrumpfendem Kompost und den Humus-Box-Wänden eine Luftschicht ergeben kann; B) Man erkennt die Feuchtigkeits- Herausforderung auch daran, dass viele Lüftungs-Löcher oder -Schlitze in den Außenwänden vorhanden sind. Diese bergen nämlich immer die Gefahr der Austrocknung in sich, was man auch nicht will; C) Wenn der Kompost - bei den derzeitigen Konstruktionen - ausreichend Luftschicht schaffend absacken/schrumpfen würde, wäre - bei gleichbleibend vielen Lüftungslöchern und Schlitzen, wie derzeit bei vielen Modellen üblich - der Kompost zu trocken. Und bei Modellen mit (zu) wenig Löcher-/Schlitzen-Konstruktionen, würde nicht explizit eine Zwischendurch-Umschichtung zwecks Lüftung offiziell empfohlen werden; D) Hilfskonstruktionen, wie "Freiräume" schaffende Lamellen an den Innenseiten der Wände, schaffen nach unserer Einschätzung nicht genügend wirkliche Durchlüftung, sondern eher etwas Luft in kleinen Zwischenräumen - und wirken (insbesondere, wenn zu groß gestaltet), eher als Bremse durch Verhaken von Humusteilen. Somit kommt es zu Verstauungen und zu Unterbrechungen einer geplanten Durchlüftung.

Mit der flacheren - als im Markt üblichen - Schrägung 4 wird des weiteren mehr Stabilität erzielt. Aus senkrecht, wie auch aus nur minimal schräg verlaufenden Wänden von heutigen Kompost- Varianten resultiert relativ wenig Stabilität aus sich gegenseitig stützenden Wänden heraus. Diese gegenseitige Stützung erreicht das neue System durch Einführung bzw. Optimierung einer weiteren Dimension: 3-D. Die Sich-Stützen-Kraft bei senkrechten Wänden ist primär 2-dimensional: Man kann eine Senkrecht-Kannte einer quadratischen Humus-Box leicht eindrücken, was zu einer Verformung in Richtung Rhombus führt. Diese Verformung ist bei der nun vorliegenden Erfindung der Schrägungsoptimierung kaum möglich. Die Wände stabilisieren sich hier gegenseitig. Auch aus diesem Grund überdauerten die Pyramiden so viele Jahrtausende.

Auch wird an diesen Figuren deutlich, dass an den Wänden keine Lüftungslöcher 5 sind. Die Lüftung bei dieser neuen Erfindung erfolgt vom Boden 6 her, was bei den meisten existierenden Modellen nicht geht, da sie entweder keinen Boden haben oder nur mit einer sehr wackeligen, schwachen Boden-Platte aus z.B. Plastik oder Draht-Gitter ausgestattet sind - und die meisten Modelle direkt auf dem Boden oder auf den genannten Boden-Platten (welche kaum unterlüftet werden kann) aufgesetzt werden.

Nicht zuletzt wird an diesen Figuren deutlich, dass keine einzelnen Verbindungs-Punkt-Systeme zu sehen sind. Es werden primär Längs-Systeme (über die gesamte Verbindungsseiten verlaufend) als Zusatz-Systeme 7 oder aber bereits bei Produktion (Guss) implementierte Verbindungssysteme auf der ganzen Länge 8 als u.a. Wandverbindungen genutzt.

In Fig. 5 wird ein Verbindungselement 9 auf der Innenseite einer Ecke gezeigt, in welcher zwei Wände 1 verbunden werden. Hier wird deutlich, dass diese Erfindung von den im Markt üblichen Punkt-Verbindungen abweicht. Das neue Konzept ist eine Flächen-Verbindung, welche über die gesamte Seiten-Länge der jeweiligen Wandseite verläuft, um zusätzliche Stabilität zu erlangen.

Selbst, wenn diese Verbindungsschiene nicht angeklebt, sondern an mehreren Punkten "nur" geschraubt wird, ist/sind die Schiene/n als solche (ein) weiter(er) stabilisierende(r) Faktor/-en.

In der Schnittzeichnung der Fig. 5 wird zusätzlich deutlich, dass in dieser Humus-Box eine kontinuierliche Humusierung erfolgt. Der Humusierungsprozess läuft ohne z.B. Zwischenstufen, Barren oder Fächer, in/mit welche/n jeweils etwas Kompost geschoben - oder für eine weitere Humusierungs-Stufe freigegeben - werden muss. Da Humus je nach Zutaten, Dichte, Umhüllung, Lüftung, Temperatur, Feuchtigkeit, Blockaden, ... äußerst unterschiedlich verrottet, passt ein vorab menschlich definiertes Zeit-, Raum- oder Mengen-Wunsch-Konzept (wenn der erste Kasten mit Rotte nachgefüllt ist, wird "mit Sicherheit" der Kompost im unteren, zweiten Kasten schon zu Humus verwandelt worden sein ...) nicht unbedingt zu den Entwicklungen in der realen Natur.

Die in Fig. 5 dargestellte einfache Schiene 9 kann außen oder innen an zwei zu verbindenden Wänden (z.B. mit - wieder lösbarem - Silikon) angeklebt oder (hier nicht gezeigt) angeschraubt werden. Bei Verschraubung oder Silikon-Verklebung kann diese Schiene auch wieder gelöst werden, um Erweiterungen oder Umformungen der Humus-Box zu realisieren.

Fig. 6: Einzeln dargestellte einfache Verbindungsschiene 9 für über Eck zu verbindende (Wand-)Teile.

Fig. 7: Einzeln dargestellte einfache Verbindungsschiene 10 für z.B. längsseits oder hoch zu erweiternde Flächen.

Fig. 8: Seitlich betrachtete doppelwandige Ecken-Verbindungs-Leiste 11, in welche die Wände rein- oder raus-geschoben 1 und bei Bedarf verschraubt oder verklebt (beides hier nicht dargestellt) werden können - und auch wieder von dieser Leiste separiert werden können.

Fig. 9: Wie Fig. 8, jedoch ein Leisten-Ende betrachtend.

Fig. 10: Doppelwandige Flächen-Verbindungs-Leiste 12. Diese Flächen-Verbindungs-Leiste ist das Pendant zur Doppelwandigen-Eck-Verbindungs-Leiste - nur eben, für Flächenvergrößerungen gedacht. Sie eignet sich für Erweiterungen nach rechts, links, oben und unten und verbindet dabei die jeweils geeigneten Baukasten-Wandteile, dadurch, dass diese in die Schlitze eingefügt 1 und verschraubt oder verklebt (hier nicht dargestellt) werden.

Fig. 11: Doppelwandige Kannten-Verstärkungs-Leiste. Diese Verstärkungs-Leiste kann, wie der Name schon sagt, (empfindlichere) Kannten verstärken. Sie kann aber auch stabilisierend ober- und unterhalb von (oder auch über den Enden der) Flächen-Verbindungs-Leisten 12 - und die beiden jeweils verbundenen Wandplatten-Ränder mit umfassend - arretiert werden, um als weiterer Aspekt gegen eine potentielle Biegung der verbundenen Wände an der Verbindungsstelle zu wirken (hier nicht dargestellt).

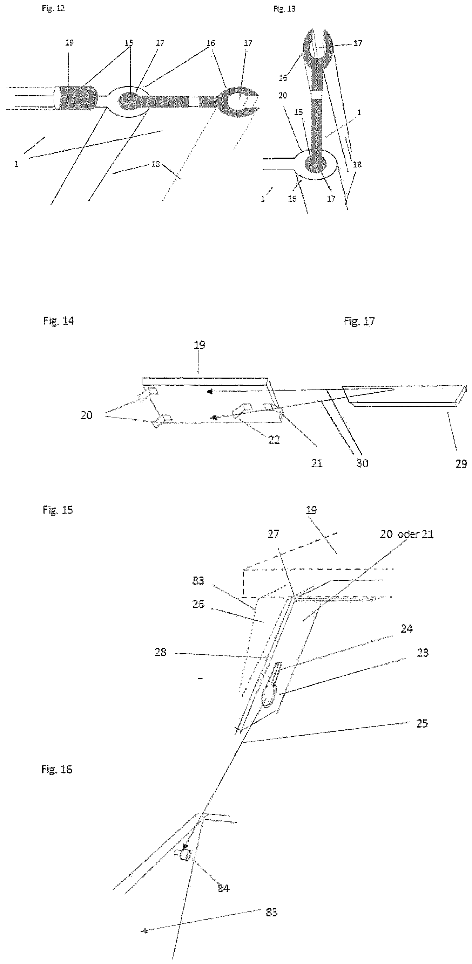

Fig. 12: Statt z.B. die Wände nachträglich mit Zusatz-Teilen zu verbinden, können Wandverbindungen bei Form-Teilen mittels Guss-Verfahren bereits bei der Produktion der Wände mit und an den Wänden mitproduziert werden. Die in Fig. 12 dargestellte, in der Fläche erweiterte Wand zeigt zwei Wand-Teile. An deren rechtem Ende werden hier zwei Schienen 16 mit mittig liegendem rundem Führungsloch 17, über die gesamte Höhe der Wandseite 18 verlaufend, gezeigt. In diese Schienen- Löcher 17 wird jeweils die linke Site der neuen Wand, an welche eine Art Rohr 15 angebunden ist hineingeschoben, um die Ursprungswand zu verlängern. Dieses Rohr kann senkrecht 15 oder bei Höhenerweiterungen auch waagerecht 19 verlaufen. Dann würde hier als Gegenstück eine waagerecht verlaufende Schiene der oberhalb verlaufenden Wand arretiert werden können (hier nicht dargestellt).

Fig. 13: Statt der bei Fig. 12 dargestellten seitlichen Verlängerung einer Wand, wird hier eine

Erweiterung über Eck auf derselben Basis dargestellt. Der Unterschied ist hier, dass die Verbindungs-"Schiene" 20 nicht gerade, in Wandrichtung, verläuft, sondern eine Öffnung an einer Seite aufweist. Eine ähnliche Konstellation ist für den übereck waagerechten Bereich möglich (hier nicht dargestellt).

Fig. 14: Mit diesem Deckelsystem ist eine einfache Öffnung und Schließung der Humus-Box von oben möglich.

Die Grundversion des Deckels besteht aus einer Platte 19, welche auf der Oberkannte der Humus- Box aufliegt und diese gegen z.B. Regenwasser sicher abschließt. An der Unterseite dieser Platte sind simple Stahlspangen in weit geöffneter L-Form von bedingt biegungsresistenten, jedoch dennoch angewinkelten schmalen Stahlblechen arretiert: z.B. zwei auf einer Seite 20 und eine auf der anderen Seite 21 des Deckels 19. Diese Stahlspangen spannt man in die schräg verlaufenden Oberkannten der Humus-Box-Wände ein, womit sich eine Absicherung des Sitzes der Deckelplatte ergibt.

Zum Schließen lehnt man zunächst den Deckel mit der Seite mit z.B. den zwei Stahlspangen 20 gegen die Innenseite der Oberkannte der Humus-Box an. Danach drückt man mit dem Daumen die Stahlspange 21 auf der anderen Seite des Deckels zur gegenüberliegenden Seite hin und kippt nun diese Deckelseite mit der restlichen Handfläche oder mit Hilfe der zweiten Hand nach unten.

Das Öffnen des Deckels erfolgt mit Drücken gegen eine der Seiten mit der/den Stahlspange/n und Hochdrücken des Deckels auf der Seite, wo man drückt. Sollte die Stahlspange in einer Sicherung
einrasten, muss etwas runtergekippt werden, die Stahlspange tiefer (zur Mitte) eingedrückt werden um dann endgültig den Deckel nach oben zu kippen und herausnehmen (hier nicht dargestellt).

Mit der gleichen Spangen-Art ist ein Haken 22 konzipiert, welcher zum Aufhängen des Deckels am oberen Rand der Humus-Box dient.

Durch diesen Deckel ist die Humus-Box gegen Öffnung oder Wegpusten durch Wind aber auch gegen Durchfeuchtung durch Regenwasser gesichert. Zugleich werden im Markt übliche sensible und verrottbare Schließmechanismen durch robuste kaum verrottbare Stahl-Schließmechanismen ersetzt.

Dieses Deckel-System eignet sich zusätzlich auch zur (Durch-)Lüftung der Humus-Box:
Wenn alle Stahlspangen der Außenseiten auf die Außenflächen der Oberkannten der Humus-Box- Wände gelegt werden, wirkt der Deckel z.B. gegen Regenschutz oder Sonnenstrahlen, weist jedoch dennoch eine Spalte als Lüftungsöffnung auf. Diesen Regen- und Sonnenschutz bieten viele andere Systeme mit ihrer Konstruktion als z.B. Kipp- oder Schiebe-Deckel nicht (hier nicht dargestellt).

Um eine aktive(re) Luft-Zu- oder Ab-Führung zu erreichen, kann dieser Deckel auch schräg, halb zugeklappt, aufgestellt werden. Hierzu wird er an der Seite mit den beiden Stahlspangen 20 an der Innenseite der Humus-Box-Oberkannte 83 (s. Fig. 16) angelehnt und die Stahlspange der anderen Seite wird auf der Außenseite der Humus-Box-Oberkannte angelehnt. Wenn der Wind aus der Richtung der Öffnung kommt, wird Luft hineingepustet. Wenn der Wind aus der anderen Richtung kommt, entsteht eine Art Vakuum - und Luft wird heraus gesogen (hier nicht dargestellt)

Dank möglicher Räder-Anbringung - kann die Humus-Box auch zu der jeweils gewünschten Wind- Richtung gedreht werden (später dargestellt).

Fig. 15: Bei waagerechter Lüftungseinstellung wird, zur Verhinderung eines potentiellen Wegwehens des Deckels, dieser Deckel z.B. über Schauben-Köpfe 84 mit den Löchern 23 in den Stahlspangen 20 oder 21 verbunden. Diese Stahlspangen weisen jeweils eine Öffnung 23 - an deren vom Deckel abstehenden Seite - auf, welche wie eine Art (altes) SchlüsselLoch sind: Loch 23 mit darüber (oder darunter) anschließendem Schlitz 24 . Die Handhabung wird mit dem Pfeil 25 dargestellt: man schiebt das runde Loch über den Schraubenkopf 84 - und schiebt danach den Schlitz hinter den Schraubenkopf indem man den Deckel 19 mit der arretierten Stahlspange 20 oder 21 nach unten schiebt. Die Schrauben-Köpfe "verstecken" sich bei normaler Schließung im Zwischenraum/Abstand 26 zwischen dem Beginn der Stahlspangen-Arretierung am Deckel 27 und dem Abstand 26 zur Innenseite der Humus-Box-Wand 83, an welcher die Schraube 84 arretiert ist.

Bei schräger Deckel-Einstellung zwecks Wind-Kräfte-Nutzung wirkt die Schrägfläche 28 der zwei Stahlspangen 20 , welche die Schrauben 84 im Zwischenraum 26 einkeilen auf der einen Seite - und die Kombination mit der eingerasteten 25 Stahlspange 21 / Schaubenkopf 84 -Kombination auf der anderen Seite der Humus-Box-Oberseite als Schutz gegen Herauswehen des Deckels. Auch in diesem Fall "verstecken" sich die Schrauben 84 nämlich im Zwischenraum/Abstand 26, wie bei dem oben dargestellten Zustand des geschlossenen Deckels.

Auch diese Flexibilität der Wind-Nutzung zur Belüftung bzw. Absaugung bei gleichzeitigem Schutz gegen Regenwasser-Durchfeuchtung und Sonnenschein-Austrockung bieten andere Systeme im Markt nicht.

Fig. 16: Der stabilisierende Aspekt der Schraube 84 in der Innenwandseite der Humus-Box-Wand 83 wurde bereits unter Fig. 15 mit dargestellt.

Fig. 17: Das technische Lüftungssystem durch Schräglage des Humus-Box-Deckels unter aktiver Nutzung der natürlichen Winde ist dadurch optimiert, dass an den (bei schräger Deckelpositionierung schräg verlaufenden) Seitenbereichen 30 an der Unterseite des Humus-Box-Deckels 19 auf der "Höhe", wo die Innenkannten der Humus-Box-Wände enden, zusätzliche, nach unten in die Humus- Box ragende Wände 29 angebracht sind. Diese Wände sind nur so tief, wie es die Arretierungen der Deckel-Positionierung erfordern. Saug- und Pustewirkung werden auf diese Weise verstärkt. Die seitlichen Endstücke dieser Wände sind zum Zentrum des Deckeln hin an deren abstehenden Seiten abgerundet oder abgeschrägt gestaltet, um beim Hochkannten des Deckels nicht an den Humus-Box-Innenseiten der Wände zu verhaken. Die Arretierungs-Stahl-Spangen werden daneben, zum Zentrum hin, arretiert. Diese Wände sind auch ein weiterer stabilisierender Aspekt am Deckel.

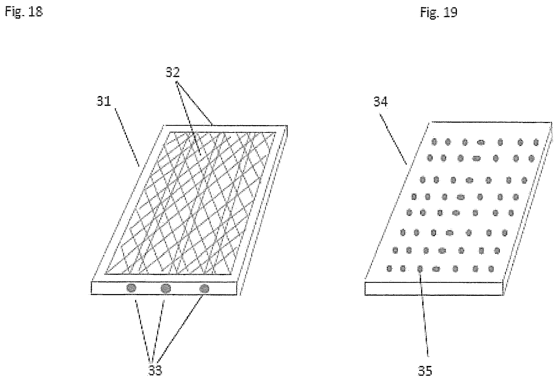

Fig. 18: Hier wird eine stabile, tragende Boden-Platte 31 dargestellt, welche z.B. als ein unterer Abschluss, für z.B. eine stehenden Humus-Box genutzt werden kann. Diese besteht z.B. aus einem Gitter mit oder ohne Rahmen 32 (Rahmen, wie bei Sandsiebe-Systemen üblich) und - falls Gitter und Rahmen nicht stabil genug sind, ist ein Stützungs-System integrierbar: z.B. durchlaufende unbiegsame Stahlstangen, welche am Rahmen arretiert sind 33 . Das Hauptziel dieser Platte ist das Höhersetzen von Humus-Boxen, um durch das Gitter genügend Luft an die besonders gefährdeten Bereiche in der Boden-Mitte von Humus-Boxen gelangen zu lassen, damit dieser Humus nicht verfault.

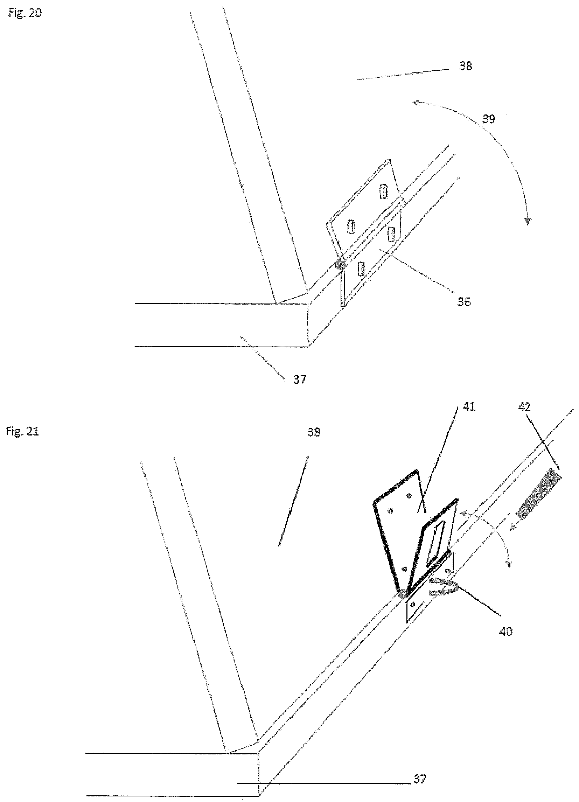

Dieses Gitter kann mit Standard-Arretierungssytemen mit der Box verbunden sein, wie z.B.:
a) an einer der Humus-Box-Seiten-Wände mit einem oder mehreren z.B. Scharnier/en (36 in Fig. 20, ) befestigt sein - oder / und
b) an mehreren oder allen (übrigen) Wänden mit jeweils einem flexiblen Schließ- und Öffnungs- Mechanismus (wie z.B. jene mit einem Ösen- (40 in Fig. 21) /Blechstangen- Klappmechanismus (41 in Fig. 21 und Verschluss-Keil (42 in Fig 21) oder Schloss)), der von Kisten oder Werkzeug-Kästen/-Hütten bekannt ist) .

In dieser technischen Ausführung ist das Boden-System eine stabile Komponente, welche zugleich die Humus-Box als solche stabilisiert und auch ein stabiler, tragender Abschluss für stehende Humus- Box-Systeme.

Dieses stabile Boden-System geeignet sich z.B.:
- als Auflage für Kompost und Humus in der Humus-Box;
- für den Flüssigkeitsausfluss aus dem Humusierungs-Prozess;
- für eine erhöhte Platzierung der Humus-Box auf z.B. Stützen oder Stein-Untergrund;
- für Durchlüftbarkeit von unten;
- für die Belüftbarkeit der besonders gefärdeten Bereiche in der unteren Mitte des Komposthaufens in der Humus-Box, welche sonst systemtechnisch kaum erreichbar sind;
- zur Abwehr von Ungeziefer durch das erhöhte Aufstellen oder/und durch nur kleine Löcher in der Bodenplatte;
- damit alles beim Kippen stabiler ist;
- damit alles beim Versetzen stabiler ist;
- um im gekippten Zustand als Abdeckung offen oder verschlossen zu sein;
- um z.B. für Humusentnahme offen zu sein.

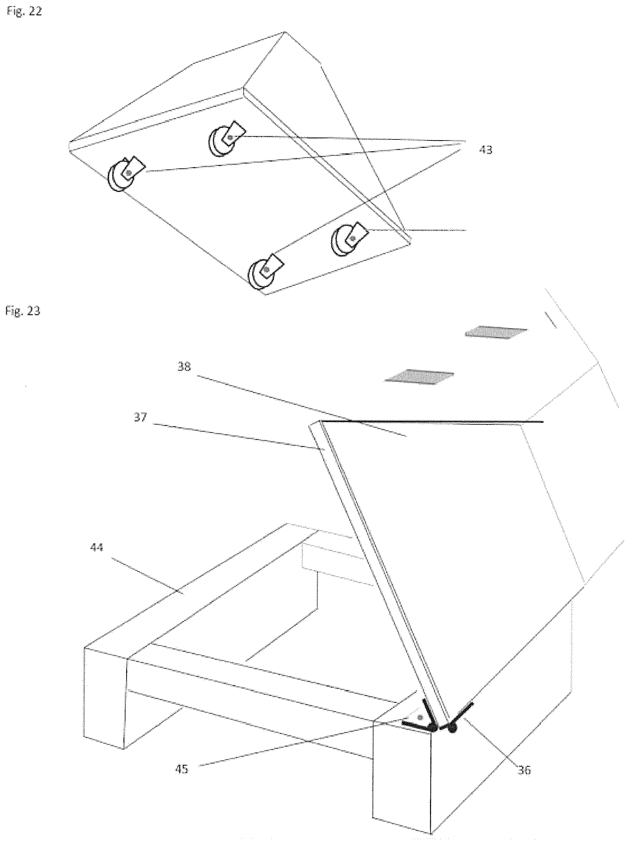

Fig. 19: Wie in Fig. 18 geht es bei Fig. 19 auch um eine stabile, tragende Boden-Platte 34 , z.B. aus Holz, Metall oder Kunststoff, welche z.B. als ein unterer Abschluss, für z.B. eine stehende Humus-Box genutzt werden kann. Das Hauptziel dieser Platte ist auch das Höhersetzen von Humus-Boxen, um durch - in diesem Fall kleinen Löcher aus z.B. Bohungen - genügend Luft an die besonders gefährdeten Bereiche in der Boden-Mitte von Humus-Boxen gelangen zu lassen, damit dieser Humus nicht verfault. Alle Aspekte, die unter Fig. 18 aufgeführt worden sind, gelten auch hier entsprechend. Bei einige Aspekten ist jedoch eine Bodenplatte aus Holz, Metall oder Kunststoff besser geeignet:
a) Anpassbarkeit der Boden-Platte an jeden Humus-Box-Boden
b) Anbringung von Scharnieren (36 in Fig. 20)
c) Anbringung von Verschluss-Systemen, wie z.B. Ösen- (40 in Fig. 21) /Blechstangen- Klappmechanismus (41 in Fig. 21 und Verschluss-Keil (42 in Fig 21) oder Schloss)), der von Kisten oder Werkzeug-Kästen/-Hütten bekannt ist) .
d) Anbringung von Rädern (43 in Fig. 22 ) zwecks Erhöhung, Verlegung oder/und Schwerpunkt-Verlagerung zum Zentrum zwecks leichterer Kippbarkeit
e) Anbringung des Bodens (37 in Fig. 23) auf z.B. einem Balken-Gerüst (44 in Fig. 23) - zwecks Höhersetzung, mehr Stabilität und besserer Kippbarkeit - mittels eines weiteren Scharnier- Systems (45 in Fig. 23) zwischen Humus-Box-Bodenplatte 37 und Balkengerüst 44.

Fig. 20: Hier wird ein Anschluss mittels eines Scharniers 36 dargestellt. Dieses Scharnier ist an einer Wand 38 der Humus-Box angeschraubt und an einer Seite einer Fußbodenplatte 37 angeschraubt. Das Scharnier wird benötigt, um insbesondere Beim Kippen 39 der Humus-Box den Boden und die Humus-Box zusammen zu halten - und somit auch den Kippvorgang zu stabilisieren.

Fig. 21: Hier wird die Arretierung der Humus-Box 38 mit einem Boden-Brett 37 mittels Anbringung eines Verschluss-Systems, wie z.B. Ösen- 40 und Blechstangen-/Klappmechanismus 41, sowie Verschluss-Keil 42 oder Schloss - was von Kisten oder Werkzeug-Kästen/-Hütten bekannt ist - dargestellt. Ein Verschluss in dieser oder ähnlicher Art ist erforderlich für das Kippen der Humus-Box, damit der Humus und Kompost nicht beim Kippen herausfällt. Bleibt Kompost und Hums während des Kippens stabil in der Box, kann nach der seitlichen Auflage der Box diese Boden-Platte durch Öffnung des/der Schließmechanismen geöffnet werden und die nun obere, schiefliegende Lage an Humus abgetragen werden, bis den noch nicht ganz fertige Kompost erscheint. Danach wird die Bodenplatte wieder zu geklappt, verschlossen - und die Humus-Box wird in die vertikale Position wieder zurückgeklappt.

Fig. 22: Hier wird gezeigt, dass unterhalb der Bodenplatte der Humus-Box z.B. vier Räder 43 z.B. zwecks Erhöhung (für bessere Luftzuführung), leichterer Verlegung (zur Sonne oder in den Schatten) oder/und Schwerpunkt-Verlagerung zum Zentrum (zwecks leichterer Kippbarkeit für Humus- Entnahme) angebracht werden können.

Fig. 23: Obwohl natürlich auch unter einem massiven Balkengerüst 44 Räder angebracht werden können, ist die Nutzung eines Balkengerüstes primär darauf ausgerichtet, eine stabilere Grundlage für größere Humus-Boxen zu bieten. Dieses gilt insbesondere für unsere Kipp-Lösung bei größeren Humus-Boxen. Hier wird der Boden 37 der Humus-Box 38 mittels eines oder mehrerer Scharniers/e 45 an dem Balkengerüst 44 angebracht. Dieses Scharnier(-System) 45 sollte an derselben Seite angebracht werden, an welcher das/die Scharnier/e angebracht sind, welche die Humus-Box 38 mit ihrem Boden 37 verbindet/n, da nur so eine Öffnung der Humus-Box-Bodens nach dem Kippen der Humus-Box möglich ist.

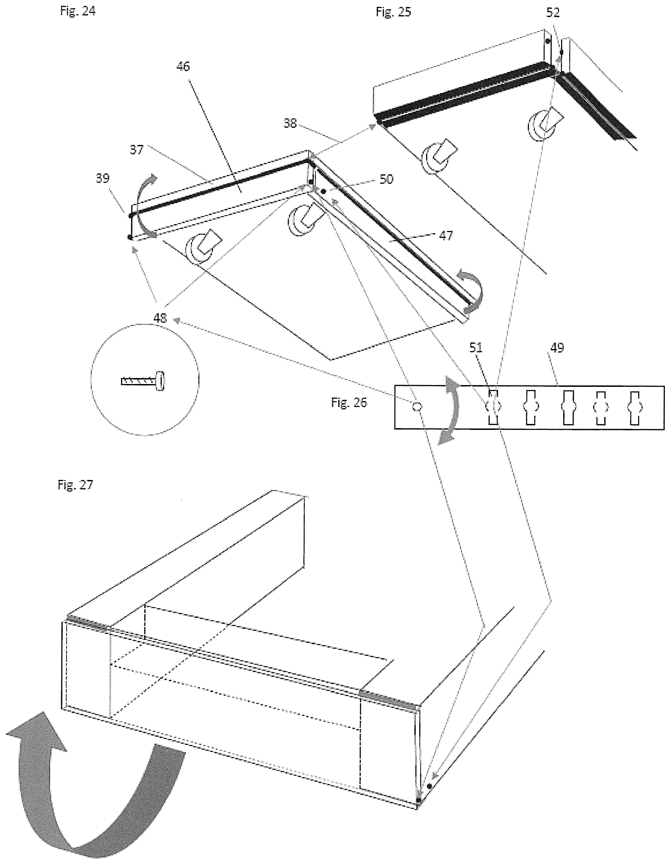

Fig. 24: Parallel zu diesen Lüftungstechniken sind technische Systeme vorhanden, welche sich dadurch auszeichnen, dass sie geeignet sind für: a) sowohl eine Verstärkung der Durchlüftung des Inhalts im Inneren der Box; b) als auch eine Abschirmung der Durchlüftung des Box-Inhaltes und, dass das System für kleinere wie auch für größere Humus-Boxen geeignet ist.

Dieses wird bei kleineren Humus-Box-Modellen z.B. dadurch erreicht, dass ein "Anti-/Pro-Lüftungs- Brett" 46 an der unteren Kannte einer der Seiten des Humus-Box-Boden-Brettes 37 mittels z.B. einem langen Scharnier 38 angeschraubt ist. Das Scharnier ist so angebracht, dass es in der ersten Haupt-Lage (wie in Fig. 24 dargestellt) geschlossen ist, mit dem querlaufendem Scharnier-Mittel- Bolzen nach außen 39 (weg vom Humus-Boden-Brett und Anti-/Pro-Lüftungs-Brett) gerichtet. In dieser Lage sorgt das am unteren Bereich des Scharniers festgeschraubte Brett 46 dafür, dass eine Durchlüftung an dieser Humus-Box-Seite - zumindest von unten - unterbunden ist.

Dieses System ist bei allen Seiten fast gleich - mit einigen kleinen Unterschieden. Die Anti-/Pro- Lüftungs-Bretter der "linken" 46 und "rechten" (nicht dargestellt) Seite sind außerhalb der "vorderen" 47 und hinteren (nicht dargestellt) Anti-/Pro-Lüftungs-Bretter montiert - jedoch alles innerhalb des Grundrisses und Außenkannten der Humus-Box-Boden-Platte 37. Des Weiteren ist auf den (hier) vertikal verlaufenden schmalen Brett-Endseiten der "linken" und "rechten" Anti-/Pro- Lüftungs-Bretter 46, an dessen unteren Kannten 48 jeweils eine Schraube - nach vorne und auf der anderen Seite hinten rausragend - angeschraubt ist, welche als feste Schrauben jeweils ein schwenkbares flaches Blech 49 mit Einrastlöchern halten. In diese Einrastlöcher rasten Schraubenköpfe 50 ein, welche an den unteren Ecken der Außenseiten der "vorderen" und
"hinteren" Anti-/Pro-Lüftungs-Bretter eingeschraubt sind. Dabei wird in der ersten Hauptlage jeweils dieser zuletzt genannte Schraubkopf in dem jeweils ersten Einrastloch 51 des jeweiligen Bleches eingerastet - jenes Loch, welches der Schwenk-Loch-Schrauben-Kombination 48 am nächsten ist.

Soll Luft in die Humus-Box kanalisiert hineinströmen, so ist das Schwenkbleck mit Einrastlöchern, z.B. mit einem mittleren Loch, in seine dafür nutzbare Schraube eingerastet- und hierdurch das Anti-/Pro-Lüftungs-Brett z.B. mit 45 Grad schräg nach oben gestellt (hier nicht dargestellt).

Fig. 25 Soll der ganze Boden der Humus-Box nur leicht umlüftet werden, so können alle Anti-/Pro- Lüftungs-Bretter nach oben gestellt werden. Nun ist das Schwenkblech nicht mehr im Außenbereich an der gegenüberliegenden Schraube 50 des quer verlaufenden "vorderen" oder "hinteren" Seite des Anti-/Pro-Lüftungs-Brettes befestigt, sondern an der gleichen Schraube, welche aber durch die Brettdrehung nun im inneren Bereich 52, zur Humus-Box hingewendet, liegt.

Fig. 26: Hier wird das bereits beschriebene Schwenk- und Einrast-Blech dargestellt

Fig. 27: Das gleiche System - wie unter Fig. 24 - 26 beschrieben - kann auch an ein Balkenfundament angebracht sein. Aber auch Varianten für die Öffnung von nur einer oder zwei Seiten sind möglich - insbesondere, wenn eine Seite des Balkenkonstrukts aus einem Balken ohne Öffnung besteht. Dann gilt dieser Balken als Pendant für die Seite, wo eingerastet werden kann.

Die Höhe dieser Anti-/Pro-Lüftungs-Bretter ist abhängig von der Höhe des jeweiligen Humus-Box- Erhöhungs-Systems (z.B. Räder oder Balken).

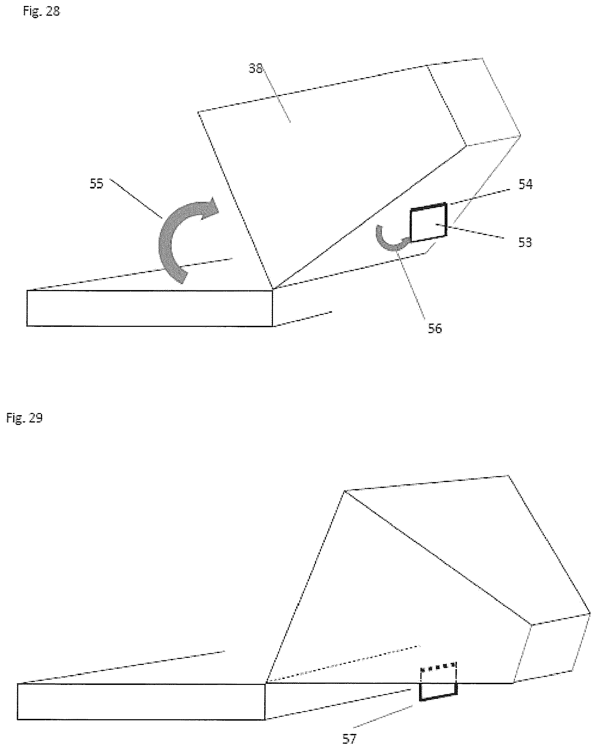

Fig. 28 An der Humus-Box 38 ist auf einer Seite - auf Halber Höhen-Strecke dieser Seite, mittig - ein Brett 53 an z.B. einem Schwenk-Scharnier 54 arretiert.

In einer besonderen Ausgestaltung hat dieses Brett am unteren Ende eine Auflage, z.B. eine Schwenk-Fuß-Platte, welche beim Ausschwenken des Brettes durch das Kippen der Humus-Box waagerecht positioniert ist (hier nicht dargestellt).

Das Schwenkbrett öffnet 56 sich beim Kippen 55, wenn zu der Seite gekippt wird, wo dieses Brett arretiert ist.

Fig. 29: Beim Erreichen des waagerechten Winkels von dieser dann unten liegenden Außenwand, ist dieses Brett (in besonderer Ausgestaltung: mit seiner Schwenk-Fuß-Platte) eine Bodenauflage 57.

Dieses Schwenkbrett ist mit einem Einstell-System zur Erzielung der gleichen Höhe, wie jene, worauf die Humus-Box steht, ausgestattet. Auf diese Weise ist die Humus-Box liegestabil (nicht dargestellt).

In dieser Lage ist der Humus-Box-Bodenbereich schief geneigt. Durch diese Technik sind Kompost und Humus in der Humus-Box stabil. Die Bodenplatte liegt - ohne Belastung - nur noch auf (dem Kompost und Humus) und hat hier keine system-technische Halte-Funktion. Sie ist öffenbar. Der Humus ist abtragbar.

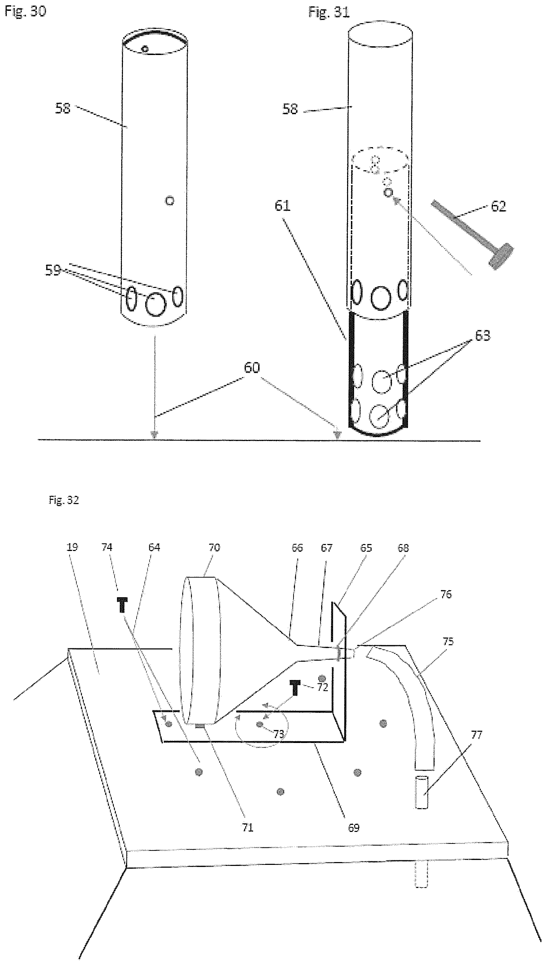

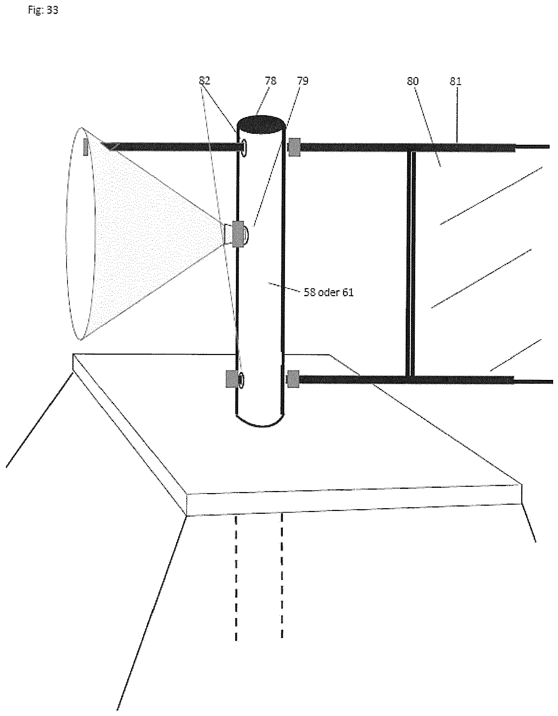

Fig. 30: Ein (oder mehrere Rohre) Rohr 58 mit Lüftungslöchern 59 , welche z.B. mittig und senkrecht - von unten bis oben ragend - in einer Humus-Box an der/den brisantesten Feuchtigkeitsstelle/n - platziert ist (nicht dargestellt) und insbesondere dadurch gekennzeichnet ist, dass
a) die Lüftungslöcher z.B. nur im untersten Bereich sind 59 oder/und
b) die Lüftungslöcher auf verschiedenen Höhen sind
c) die Lüftungslöcher - in besonderer Ausgestaltung - offen oder verschlossen sind - und zwar mittels jeweils einem biegsamen aber in sich stabilen Inlays wo Löchern an verschiedenen Stellen sind, wodurch je nach Positionierung die - je nach Höhe jeweils an einer anderen Seite des Rohres platzierten - Rohr-Löcher offen oder verschlossen sind (nicht dargestellt)
d) das Inlay - in der besonderen Ausgestaltung - in verschiedenen Positionen einstellbar ist (nicht dargestellt)
e) dieses Rohr entweder lose ist oder arretiert ist in Führungen am Boden oder/und Deckel oder/und seitlich an einer oder mehreren Wand/Wänden (nicht dargestellt)
f) dieses Rohr an einem oder mehreren Ausgang/Ausgängen nach außen angeschlossen ist - bzw. "eingebunden" ist (wenn nur generelle Luftlöcher vorhanden sind) (hier nicht dargestellt) - oder/und
g) dieses Rohr (bzw. zumindest eines der Rohre ) einen eigenen Luft-Ausgang hat, welcher
   z.B. durch ein Loch in dem Humus-Box-Deckel mit dem Außenumfeld verbunden ist (siehe Figur 33)
h) in einer besonderen Ausgestaltung - der eigene Luftausgang dieses Rohres mit einem Dach gegen Regen versehen ist, unter welchem Luftausgangslöcher an der oberen Rohrseite vorhanden sind (nicht dargestellt).

Fig. 31: Lüftungsrohr 58 , welches in einer besonderen Ausgestaltung verlängerbar 60 ist - z.B. mit einem zweiten Rohr 61 , welches innerhalb des ersten Rohres 58 ist - und welche z.B. über gemeinsame Zwischen-Löcher an verschiedenen Stellen und in verschiedenen Höhen z.B. mit einem Schrauben und Mutter-System 62 miteinander verbunden sind - und die Luft nun nicht mehr durch gemeinsame Löcher am Boden 59 , sondern nun z.B. nur noch durch die Luftlöcher 63 des innenliegenden Rohres 61 kanalisiert ist.

Fig. 32: Hier wird das Durchlüften mittels eines Lufttrichters verstärkt, welcher z.B. an oder auf der Humus-Box arretiert ist. Besondere Merkmale sind, dass
a) der Lufttrichter in verschiedenen Positionen 64 arretierbar ist. Eine Arretierung ist. z.B. durch eine L-förmige Metall-Leiste 65 möglich, in welche der dünnere Teil 66 des Trichters - oder ein hier verlängernd laufendes Rohr 67 - in ein Loch 68 an der oberen Kannte des kurzen Teils des L's 65 integriert ist, welches dadurch senkrecht steht, dass das L auf dem langen Teil des L's 69 liegt. Zum anderen wird die größere, offene Seite des Trichters 70 mit seiner Außenkannte auf dem liegenden langen Teil des L's arretiert 71 . In dem z.B. mittlerem Teil des L's ist nun z.B. eine Schraube 72 z.B. in ein Loch 73 von z.B. dem Humus-Box-Deckel 19 durchgeführt und mit einer Mutter z.B. unter dem Deckel befestigt. Um diese Schraube ist der Luft-Trichter nun in jede Richtung drehbar. Eine Arretierung ist dadurch machbar, dass z.B. ein Stab 74 durch ein weiteres Loch 64 des liegenden L-Teils gesteckt wird und in z.B. einem - von vielen rund um das Zentral-Loch verstreuten (Halb-)Löcher - (Halb-)Loch des Deckels arretiert wird. In dieser Form arretiert, ist nun eine Schlauchanbindung 75 zwischen dünnem Ende (bzw. Rohrverlängerung) des Lufttrichters 76 und einem Loch/Rohr 77 des Humus-Box-Deckels möglich; und
b) wenn die große Trichterseite gegen die Windrichtung arretiert ist, Luft in die Humus-Box hinein-gepustet wird; und
c) wenn die große Trichterseite in Windrichtung arretiert ist, Luft aus der Humus-Box herausgesaugt wird, weil ein Vakuum hinter der großen Trichteröffnung entsteht; oder
d) die Anbindung des Lufttrichters - alternativ zur Humus-Box-Deckel-Anbringung - auch mittels Einstecken - der kleineren Trichteröffnung oder eines daran angebundenen Rohres - in ein Loch an den seitlichen Flächen möglich ist.

Fig. 33: Der Schlauch oder der Filter selber können auch an einem Lüftungs-Rohr verbunden werden, wobei
a) das Lüftungsrohr -bei Anbindung des Trichtersystems- oben verschlossen ist 78; und
b) verschiedene Löcher 79 - zwecks verschiedener Ausrichtungen des Trichters - am Rohr vorhanden sein können, wenn das Lüftungs-Rohr fest arretiert ist; und
c) die Rohrlöcher, die dann jeweils nicht mit dem Trichter verbunden sind, verschlossen sind; oder
d) der Trichter an einem Loch fest arretiert ist, wenn das Lüftungs-Rohr drehbar (und feststellbar) gestaltet ist,
e) der Trichter an einem stabilen, größerem, als "Fahne" fungierendem, z.B. Brett 80, direkt oder indirekt (z.B. über Stangen oder U-Profil-Leisten 81) an diesem Brett, oder dessen Verlängerungen - z.B. über Löchern 82 im Lüftungsrohr 58 oder 61 - in der Dreh- und feststellbaren Variante) fest angebunden ist. Dieses ist ein System, welches stets nach der sich ändernden Windrichtung ausgerichtet ist und die jeweils gewünschte Einstellung (Pusten oder Saugen) mit sich dreht und ausrichtet - auch weil die Fahnenkraft, durch dessen Fahnen-Größe, größer ist, als die potentielle Wegdrift-Kraft des Windes gegenüber der großen offenen Seite des Trichters. Wenn der Wind in die Humus-Box hinein pusten soll, ist die Brett-Fahne auf der Seite hinter der größeren Öffnung des Trichters an z.B. dem Lüftungsrohr arretiert (wie in Fig. 33 dargestellt). Wenn Luft aus der Humus-Box herausgesogen werden soll, dann ist die Brett-Fahne vor der größeren Öffnung des Trichters montiert und z.B. in Löchern des Lüftungsrohres arretiert (hier nicht dargestellt);
f) der Trichter an stabilen Rotations-Mechanismen/-Systemen oder Punkten auf dem Deckel oder/und an den Wandseiten oder/und Boden der Humus-Box angebunden ist, aber möglich ist auch eine separate Aufstellung an einer windigeren Stelle - welche mit einem Schlauch an die Box angeschlossen ist (hier nicht dargestellt);
g) z.B. am Trichter oder Rohr ein Regulierungssystem angebunden ist, mit welchem die Saug- oder Pust-Kraft regulierbar ist, oder/und einfach nur öffen- und schließbar ist (hier nicht dargestellt). Dieses kann z.B. eine einfache Scheibe sein, welche an einem Außenpunkt der größeren Trichteröffnung senkrecht, relativ fest, aber schwenkbar arretiert ist und mit wessen Schwenkung die Trichteröffnung willkürlich größer oder kleiner ist - oder welche einfach nur anbringbar oder entfernbar ist.

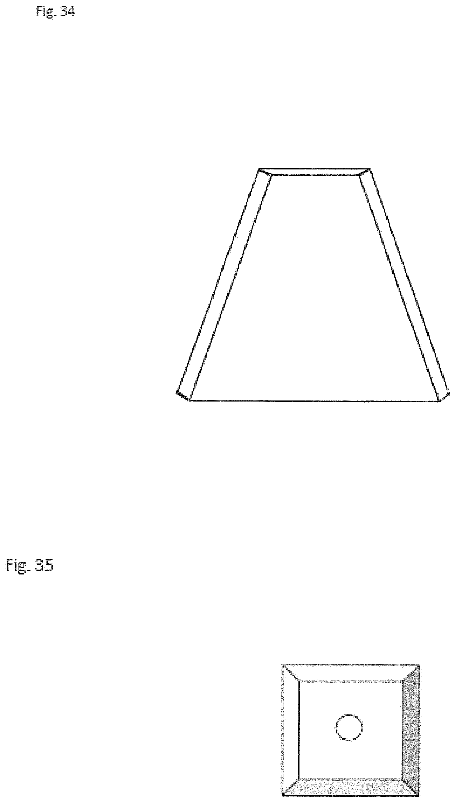

Fig. 34: Hier wird eine Platte eines Dämmungs-Systems dargestellt, welches sich dadurch auszeichnet, dass es Platten aus z.B. Styropor sind, und dass
a) diese Platten an die Außenseiten der Humus-Box angelegt sind;
b) diese Platten entlang der seitlichen Außenkannten der Humus-Box z.B. im Winkel von 45 Grad nach außen breiter werdend geschnitten sind, womit alle Wände nacheinander miteinander passend zusammen anlegbar sind;
c) diese Platten mittels Klebeband oder z.B. L-Winkel-Leisten (mit Arretierungssystem) miteinander vereint und abgesichert sind.

Fig. 35: Hier wird eine angewinkelte Deckel-Platte gezeigt. Diese kann auf den durch die Wand- Schrägung angewinkelten Oberkannten der Styropor-Platten als Abdeckung positioniert - und mit ähnlichen Systemen, wie bei den Wänden mit diesen verbunden - werden;
a) Dieser Deckel besitzt auch ein herausnehmbares, rundes Mittelteil, durch welches bei Bedarf Platz für ein Lüftungsrohr ist;
b) Das ganze Dämmungs-System kann und sollte nur dann aufgesetzt werden, wenn es erforderlich ist. Denn bei Systemen mit Standard-Thermo-Wänden wird im Sommer die Wärme der Sonne genauso ferngehalten, wie die Kälte im Winter. Damit wird aber auf enorme natürlichen Kräfte (Sonne) für eine schnelle Kompostierung verzichtet.

Die Funktionsweise der Humus-Box- (bzw. Komposter-Box-)-Familie Fig. 1 - 4 ist wie folgt. Man nimmt den Humus-Box-Deckel 19 (Fig. 14) ab und hängt ihn am Arretierungs-Blech 22 (Fig. 14) an eine der Oberkannten der Humus-Box auf. So geöffnet kann der Kompost aus z.B. dem Rasenmäher- Auffang-Beutel oder der Schredderer-Kiste direkt in die Humus-Box hinein geschüttet werden - und wird im Inneren auf dem Humus-Box-Boden gelagert z.B. 34 (Fig. 19). Auf diese erste Lage an Kompost wird gute, fruchtbare und Geziefer-/Würmer-reiche Muttererde oder/und "Schnell- Komposter" geschüttet, um den Kompostierungsprozess auch ohne Bodenkontakt - da die Kompost- Box z.B. auf einer Bodenplatte auf Rädern steht 43 (Fig. 22) - starten zu können. Danach schließt man den Deckel und lässt den Kompost vor sich hin zersetzen.

Die aus dem Zersetzungsprozess entstehende Flüssigkeit kann durch die Löcher 35 (Fig. 19) des Bodens 34 (Fig. 19) entweichen und verhindert so Fäulnis und Gerüche.

Diese Löcher 35 (Fig. 19) sorgen des Weiteren für eine ausreichende Belüftung von unten, um die brisantesten Fäulnis-Stellen automatisch (ohne Umwälzungen) zu lüften. Und diese Unterlüftung ist deshalb möglich, weil diese Humus-Box auf z.B. Rädern 43 (Fig. 22) erhöht steht.

Der Trocknungseffekt dieser Boden-Lüftungslöcher kann gesteigert werden. Zum einen kann der Humus-Box-Deckel 19 (Fig. 14) in verschiedenen Arretierungs-Positionen geöffnet werden und einen Sog- oder Pust-Effekt forcieren, je nachdem in welche Windrichtung dieser Deckel geöffnet wird.

Zum anderen kann auch im Bodenbereich durch ein Klappensystem z.B. 46 (Fig.24) nur eine Bodenklappe hoch-geklappt - und gegen die Windrichtung ausgerichtet werden. Dann wirken die anderen Klappen rund um das Bodenbrett 37 (Fig 24) als "Windauffang". Und in Windrichtung ausgerichtet wirken sie als Sog. Eine Doppel-Wirkung erzielt man, wenn der Deckel auf Durch-Pusten gegen die Windrichtung ausgerichtet ist und der Boden auf Sog, mit der Öffnung in Windrichtung steht - oder umgekehrt.

Damit diese Durchlüftung durchgängig klappt, muss zumindest an den Wänden um den Kompost herum, innerhalb der Humus-Box ein Luftzug möglichen sein. Um dieses zu ermöglichen ist die Wandkonstruktion konisch 4 (Fig. 1) gestaltet. Der hineingeschüttete Kompost fällt relativ mittig und schrumpft im Laufe der Zersetzung. Dieser kontinuierliche Schrumpfungsprozess in Kombination mit der Wand-Schrägung von 75 Grad oder flacher sorgt für genug Freiraum für Durchlüftung zwischen Kompost und Wänden. Der Kompost entfernt sich automatisch durch seine Schrumpfung, schrumpft durch die Gravitation nach unten - ohne sich an Widerständen in der Wand zu verhaken, er kaum stauen, wie bei senkrechten Wänden.

Bei extrem feuchter Kompost-Ernte kann des Weiteren ein Rohrsystem Fig. 30 und 31 oder Trichter- System Fig. 32 oder gar eine Kombination aus Rohr und Trichter Fig. 33 helfen, um z.B. in der Mitte des Kompostes einen weiteren Luftkanal zu haben.

Braucht man eher Feuchtigkeit, können alle o.g. Aspekte umgekehrt werden und kann etwas Flüssigkeit auf den Kompost geschüttet werden.

Man schüttet kontinuierlich neuen Kompost auf den alten. Der Zersetzungsprozess schreitet von unten nach oben voran, aber bleibt eher im unteren Bereich.

Ab dem Zeitpunkt, wo vermutet wird, dass sich bereits Humus gebildet hat, kann man die Humus-Box kippen Fig. 28 und 29. Und sie auf dem Ausklappbrett 57 (Fig. 29) lagern. Alternativ kann beim

Räder-System am Bodenbrett Fig. 22 die Humus-Box direkt auf eine ihrer Seiten auf den Boden gekippt werden.

Anschließend kann der Boden 37 (Fig. 23) aufgeklappt werden, da er flexibel über Scharniere zwischen Trägerbalken und Bodenbrett 45 (Fig. 23) sowie zwischen Bodenbrett und Humus-Box 36 (Fig. 23) arretiert ist. Bei der Boden-mit-Rädern-Variante wirken nur die Scharniere gemäß 36 (Fig. 20). Bei beiden Varianten wird das Bodenbrett zunächst noch mit einem Klapp-Verschluss- Mechanismus 41 (Fig. 21) festgehalten. Diese Klappverschlüsse müssen geöffnet werden. Dann kann der Boden weggekippt werden, da er in der Liegeposition nicht mehr die Tragefunktion für den Kompost und Humus hat. Wenn er weggekippt ist, kann der Humus mit einer Schaufel herausgeschaufelt werden - ohne dass der angrenzende Kompost nachrutscht, wie bei den üblichen Klappen-Systemen. Man sollte nicht den ganzen Humus entfernen, um den Verrottungsprozess nicht zu unterbinden - oder aber neue Erde oder/und "Schnellkomposter" in der gekippten Lage nachfüllen und untermischen. Ist der Humus entnommen, wird wieder alles zugeklappt und zurückgekippt. Nun ist im oberen Bereich wieder Platz, um weiteren Kompost nachzuschütten.

Ist der Kompost zu feucht oder/und möchte man die Zersetzung beschleunigen, kann man den Komposter in die Sonne rollen. Umgekehrt rollt man ihn in den Schatten, wenn er zu trocken ist. Wird es zu kalt, kann man den Komposter mit Iso-Platten isolieren Fig. 34 und Fig. 35. Wenn dann die Sonne scheint, kann man die Platten wieder abbauen, was man bei den üblichen "Thermo- Kompostern" nicht kann (wodurch man bei Standard-Modellen weniger Sonnenenergie von außen nutzen kann).

Der Humusierungsprozess läuft kontinuierlich und ohne Fächer-, Stangen-, usw. als (Vor-)Stufen- Barrieren bedienen zu müssen, welche nie 100%tig aufeinander abstimmbar sind - und auch ohne zwischendurch den "Thermo-Komposter" öffnen zu müssen, um u.a. "Lüftungs-Umwälzungen" durchführen zu müssen.

In Jahren mit viel Kompost - wie bei Gartenumgestaltungen usw. - kann die Kompostbox jederzeit erweitert werden, da es ein Baukasten-System ist: siehe Modelle in Fig. 1 bis 4, sowie die Verbindungsteile aus z.B. Fig. 5 bis 13.

Wegen dem Lüftungskonzept und der Abriegelung gegen Feuchtigkeit, sowie der Verhinderung von u.a. Stau-Feuchtigkeit entsteht ein Humus mit sehr viel Mineralien, da sie weder ausgewaschen werden noch verschimmeln. Dieser Humus ist somit qualitativ sehr hochwertig und auch quantitativ werden sehr gute Ergebnisse erreicht.

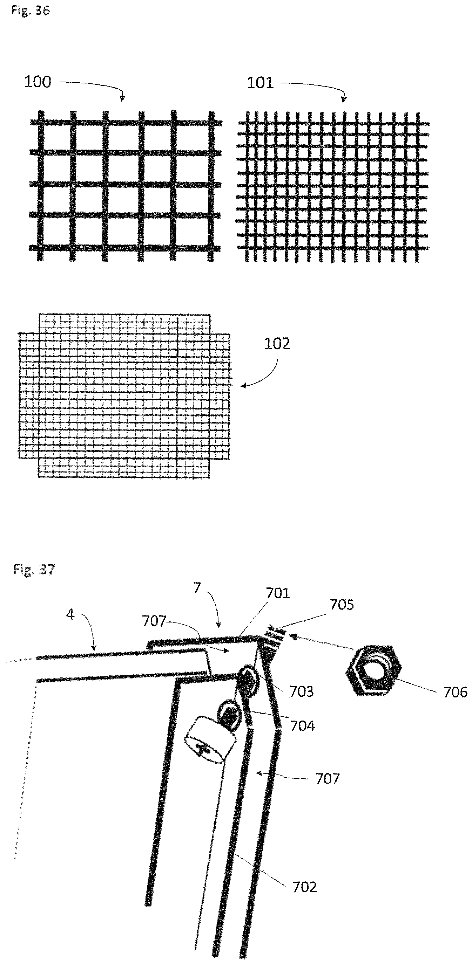

In Fig. 36 erkennt man eine schematische Ansicht von drei Gitterplatten 100. 101, 102, die übereinandergestapelt ein Gitterrost, das als Bodenrost dienen kann, bilden können. Ein erstes Gitter 100 hat starke Streben mit großen Abständen. Das zweite Gitter 101 hat eine mittlere Strebenstärke und eine etwas geringere Maschengröße das das erste Gitter 100. Das dritte Gitter 102 hat feine Streben und die kleinste Maschengröße. Das erste Gitter 100 bildet dabei das Traggerüst, das im montierten Zustand dem Erdboden am nächsten ist. Auf diesem ersten Gitter 100 wird das zweite Gitter 101 angeordnet. Auf dem zweiten Gitter 101 wird das dritte Gitter 102 angeordnet. Das zweite Gitter 101 kann dabei verhindern, dass sich das feine dritte Gitter 102 im Bereich der relativ großen Gittermaschen des ersten Gitters durchbiegt. Auf dem ersten Gitter 100 ruhen der in den Komposter eingefüllte Mutterboden und das Kompostmaterial, sowie nach erfolgreicher Kompostierung der fertige Humus. Mit anderen Worten: Alle Gitter übereinander ergeben den Auffang-Gitter-Boden, welcher auf einem Holzgerüst aufgeschraubt werden kann. Gitter-System und Holzgerüst ergeben den Zwischenboden bzw. den Basis-Boden - mit perfekter Lüftung.

In Fig. 37 erkennt man eine schematische Darstellung einer Verbindungsschiene 7 zur Montage der Seitenwände 4. Die Verbindungsschiene 7 hat eine äußere Winkelschiene 701 und eine innere Winkelschiene 702. Sowohl die äußere Winkelschiene 701 als auch die innere Winkelschiene 702 weisen Löcher auf 703, 704, durch welche ein Montagebolzen 705 hindurchschiebbar ist. Der Montagebolzen 705 kann mit Hilfe einer Mutter 706 festgelegt werden. Zwischen der äußeren Winkelschiene 701 und der inneren Winkelschiene 702 ist in jede Richtung ein Spalt 707 ausgebildet. In diesen Spalt 707 ist jeweils eine Seitenwand 4 einsetzbar, wie exemplarisch für einen der dargestellten Spalte 707 gezeigt. Die jeweilige Seitenwand 4 wird durch das Anziehen des Montagebolzens 705 fest in dem Spalt 707 eingeklemmt. Wobei die gesamte Fläche der inneren und äußeren Winkelschiene 701, 702 als Haltefläche für die Seitenwand 4 dient.

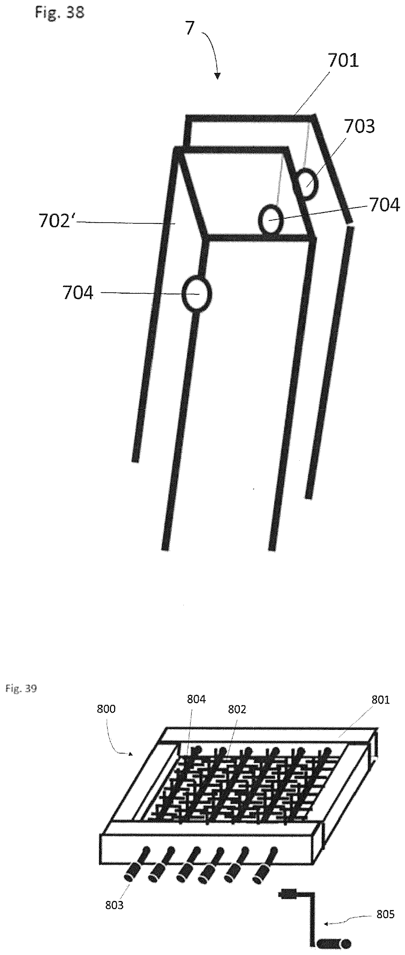

In Fig. 38 erkennt man eine weitere schematische Darstellung einer Verbindungsschiene 7 zur Montage der Seitenwände, wobei der innen liegende Teil der Verbindungsschiene als Rohr 702' ausgebildet ist. Wie bereits in Fig. 37 zu erkennen, weist die Verbindungsschiene 7 eine äußere Winkelschiene 701 auf. Anstelle der inneren Winkelschiene 702 ist hier jedoch ein Vierkantrohr 702' vorgesehen. Dies kann insbesondere für eine weitere Verstärkung der Haltekonstruktion hilfreich sein. Auch hier sind entsprechende Löcher 703, 704 in den Bauteilen der Verbindungsschiene7 ausgebildet, durch die dann eine Montage mittels (hier nicht dargestellter) Montagebolzen erfolgen kann.

In Fig. 39 erkennt man eine schematische Ansicht eines Bodenrost 800, bei dem der Bodenrost 800 aus Nagelstangen 803 gebildet ist. Der Bodenrost 800 hat einen Rahmen 801 durch den Stangen 803 gesteckt sind. In die Stangen 803 sind Nägel 804 geschlagen, so dass die Nagelstangen 802 gebildet werden. Die Nagelstangen 802 können mit Hilfe einer Kurbel 805 gedreht werden.

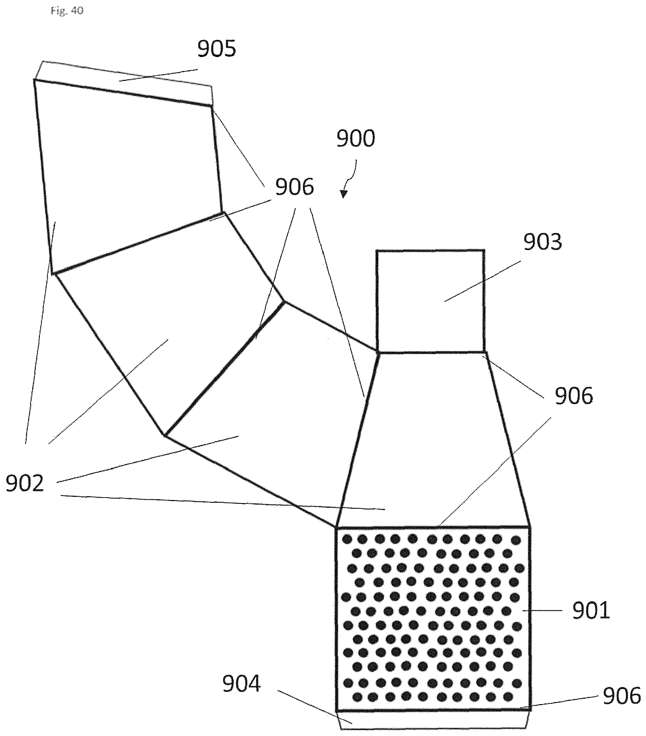

In Fig. 40 erkennt man eine schematische Ansicht eines als Faltstück 900 ausgebildeten Komposters im nicht montierten Zustand. Das Faltstück 900 ist als durchgängige Platte ausgebildet, bei der die einzelnen Elemente des Komposters an Faltstellen 906 miteinander verbunden sind. Das Faltstück 900 weist einen Bodenrost 901, vier Seitenwände 902, eine Deckelplatte 903 sowie Verbindungslaschen 904, 905 auf. Man erkennt, dass die Seitenwände 902 schrägverlaufende Seitenkanten aufweisen entlang derer die Faltstellen 906 ausgebildet sind. Beim Zusammenfalten des Komposters bildet sich dadurch die schräge bzw. konische Form des Komposters.

Die Erfindung ist nicht auf eine der vorbeschriebenen Ausführungsformen beschränkt, sondern in vielfältiger Weise abwandelbar.

Besonders vorteilhaft ist in jedem Fall ein dynamischer Komposter, zur Optimierung von Aspekten verschiedenster Art bei insbesondere der qualitativen Humus-Gewinnung im insbesondere Garten-Reste- und Bio-Abfall-Umfeld, für einen kontinuierlichen und schnellen Betrieb ausgelegt und als geschlossene "Humus(-ierungs-)-Box" gestaltet, als nicht direkt auf dem Boden (oder Boden-Gittern) stehendes System gefertigt, umfassend:
a) seitliche Umhüllungs-Fläche/-n,
a) Verbindungs-System/-e für die Umhüllungs-Flächen-Teile, wenn die Umhüllungs-Fläche nicht aus einem Guss bzw. als ein Stück gefertigt ist
b) Abdeckung/-en für offene Fläche/-n
und dadurch gekennzeichnet, dass es ein - im Normalbetrieb stets alles umhüllendes aber auch kurzfristig öffenbares - Baukasten-System ist, welches insbesondere systemtechnisch flexibel ist in Bezug auf z.B.: Grund-Varianten-Beibehaltung bzw. -Änderung; oder/und Grund-Varianten- Erweiterung oder -Reduzierung von (umschlossenem) Volumen oder/und Funktionen - mittels einem oder diversen Flächen-Teil/-en oder/und einem oder diversen Funktions-Teil/-en bzw. - Systemen.

Bei einem solchen Dynamischer Komposter ist beispielsweise vorgesehen, dass die seitliche Umhüllungs-Fläche
b) aus einem oder mehreren dreidimensionalem/-n Guss/Guss-Formen (Stück/en) ist, oder
c) eine Wand aus nur einem zweidimensionalem Teil ist (bei z.B. kreisförmiger Fläche in der 3- D-Endform oder mehreckiger Fläche, mit z.B. vorgefertigten/integrierten Biegungsecken), wessen (rechte und linke) Außenkannten z.B. nur an einer Verbindungskannte/-Ecke mit nur einem Verbindungssystem verbunden sind oder/und
d) ein Wandsystem ist, bestehend aus einem oder/und mehreren zweidimensionalen oder/und einem oder/und mehreren dreidimensionalen Teilen.

Denkbar ist auch, dass die Umhüllungs-Fläche der Wand-Systeme oder/und Boden oder/und Deckel der Humus-Box aus gleichen oder/und verschiedenen Materialien bestehen und/oder zusammengesetzt sind.

Weiterhin ist denkbar, dass die Umhüllungs-Flächen oder/und Boden oder/und Deckel der Humus-Box in gleichen oder/und verschiedenen Farben gefertigt sind.

Weiterhin ist denkbar, dass die Umhüllungs-Flächen (d.h. Wände oder/und Boden oder/und Deckel) der Humus-Box für verschiedenste Grundvarianten und dessen verschiedenste Veränderungs-Möglichkeiten (d.h. unterschiedlichste geometrische Formen - wie z.B.: rund, oval, dreieckig, quadratisch, rechteckig, usw. - und Form-Kombinationen, als - für eine variable Grund-Fläche oder/und Gesamt-Form - zwei- oder drei-dimensionale Teile) als Bauteile gefertigt sind.

Weiterhin ist denkbar, dass die Umhüllungs-Wand/-Teile und -Fläche/n sich von unten nach oben verkleinert/n, d.h., die Humus-Boxen insbesondere konisch sind.

Weiterhin ist denkbar, dass der Winkel der Wand-Schrägung/-en technisch flacher als bei den derzeit im Markt üblichen (bei primär auf Boden oder/und Gittern stehenden) Modellen ist. Hiermit ist die Humus-Box, insbesondere die Stabilität der Humus-Box - neben Stabilisierungs-Aspekten in Punkto Höhe und Breite - hier, durch die starke Schrägung, die Ausnutzung der dritten Dimension (Tiefe) stabilisierungs-technisch optimiert ist.

Die Durchlüftungs-Technik ist an den Seiten technisch optimiert, weil der Kompost - bei diesem Schrägungs-Technik-Ansatz - bei dessen Zersetzungsprozess soweit absackt/schrumpft (sich von den Wänden distanziert), dass mit sehr großer Wahrscheinlichkeit stets ein Durch-Lüftungs-Zwischenraum zwischen dem Kompost-/Humus-Bereich und den Innenwandseiten vorhanden ist, welcher bei senkrechtem Wandverlauf nicht in dieser Ausprägung möglich ist. Andere technische Durchlüftungs-Systeme - wie z.B. Lamellen-Abstandshalter oderz.B: "Zwischendurch-Umschichtungen zwecks Luftzuführung" mittels öffenbar zu gestaltender Seitenwände sind nun -mit dieser neuen system-technischen Schrägung obsolet - und somit u.v.a. auch eine produktionstechnische und materialmäßige Optimierung.

Die besondere Schrägung ist die Basis für ein besonders sicheres Arretieren des Deckels. Die besondere Schrägung ist die Basis für ein besonders sicheres Arretieren des Bodens. Die Schrägung wird schräger produziert, als die Schrägung bei z.B. verschiedensten Testsieger-Modellen, bei wessen Schräg-Typen die Schrägung nur ca. 80 Grad beträgt. Der Schrägungs-Aspekt (der Humus-Box-Typen), der in diesem Patent-Antrag eingereicht wird, ist bei mindestens 75 Grad - oder weniger / flacher (falls doch noch irgendwo ein aktuelles Modell schräger verläuft, als jene, die wir recherchieren konnten) - angesetzt. Eventuell weniger deshalb, weil das Problem der Kompost-Fäulnis scheinbar bei derzeit allen Modellen im Markt latent vorhanden ist - und wir keine schlechte Technik übernehmen möchten. D.h.: in diesem neuen technischen Ansatz ist insbesondere die schrägere/flachere Neigung der seitlichen Umhüllungen/Wände ein elementarer technischer Aspekt für ein besseres technisches Durchlüftungs-System für u.a. eine qualitativ und quantitativ bessere Humus-Ernte - oder/und der Schrägungs-Aspekt, dass die neuen Humus-Boxen schräger als alle bisherigen Modelle im Markt sind, nur eine von vielen Erfolgskomponenten ist. In Kombination mit allen anderen u.a. Durchlüftungsaspekten dieser Patenteinreichung sind die anvisierten 75 Grad oder flachere Schrägung nur ein Richtwert, bzw. ein weiterer technischer Vorsichts-Wert. In Kombination mit den anderen Aspekten resultieren multiplikative Optimierungen, welche mit Sicherheit bessere Humus-Ernte-Ergebnisse erzielen, als selbst Systeme mit noch flacheren Wandverläufen, wenn es sie denn geben sollte.

Denkbar ist weiterhin, dass die Verbindungs-Systeme oder/und Schutz-Systeme auf der ganzen Länge von Hüllen-/Wand- Verbindungs-Kannte/-n verlaufen und die Humusbox hiermit sehr stabil ist.

Denkbar ist weiterhin, dass die Wand- Flächen-Teile der jeweiligen Humus-Box-Variante durch A. flexibel arretierbare oder abnehmbare oder/und B. ergänzend oder/und C. alternativ montierbare oder/und D. bereits bei der Flächenproduktion an den Flächen integrierte Wand-Verbindungs-Systeme/- Teile verbunden sind. Diese Wand-Verbindungs-Systeme/-Teile sind je nach Zweck und Belastung aus unterschiedlichen Materialien, in unterschiedlichen Formen, Größen, Arten und Farben produziert. Beispiele hierfür sind:
- Einfache Über-Eck-Schiene in L-Format für die Wand-Ecken-Verbindungen - und einfache Flach-Schiene für Wand-Seiten-Verbindungen untereinander, für aussen oder innen, welche
- z.B. mittels über die Seitenhöhe verteilte Schraubverbindungen - direkt durch die Wände und Verbindungsteile - stabil sind.
- Zweifache Über-Eck-Schienen in L-Format für die Wand-Verbindungs-Ecken - und zweifache Flach-Schienen für Wand-Seiten-Verbindungen untereinander, für aussen und innen, jeweils gegenüberliegend, welche mittels über die Seitenhöhe/n oder Kanntenbreite/n verteilte Schraubverbindungen durch die Wände und Verbindungsteile - oder zwischen den Wand- Enden, nur die Verbindungsteile verbindend - stabil sind.
- Vorgefertigte Eck-Verbindungsschienen mit U-förmigen Öffnungen, in welchen die Wandseiten gesteckt sind und welche im Winkel von z.B. 90 Grad (bei quadratischen oder rechteckigen Grundmustern) voneinander abgewendet sind.
- Vorgefertigte Flächen-Verbindungsschienen mit U-förmigen Öffnungen, in welchen die Wandseiten gesteckt sind und welche im Winkel von z.B. 180 Grad (bei gerade verlaufenden Wandverbindungen) voneinander abgewendet sind.
- Flächen, in welchen bereits bei der Produktion Verbindungssysteme eingebunden sind. Z.B. kann eine der Seiten - von oben betrachtet - mit einer liegenden (Null) "0"-Form produziert sein - und die andere Seite mit einem kleineren "o" produziert sein. Des weiteren ist die liegende "0"-Form für gerade verlaufende Flächenverbindungen mit einem Öffnungsschlitz versehen, welcher über die gesamte Wandseite verteilt ist und welcher auf der von der Wand abgewendeten Seite ist. Dieser Öffnungsschlitz ist am Ende gerade so groß, dass die Dicke der anzuschließenden Wand gerade durch den Öffnungsschlitz passt. Und das Loch dieser "0", welches mit dem Öffnungsschlitz verbunden ist, ist gerade so groß, dass das "o" der anzubindenden Wand perfekt reinpasst - d.h. nur eingeschoben passt - und somit stabil ist. Bei Eckverbindungen ist das "0"-/"o"-Verbindungs-System z.B. im 90 Grad Winkel seitlich vorgesehen. Für mehr-seitige (z.B. seitlich und oben) Erweiterungen ist dieses "0"-/"o"- Verbindungs-System z.B. im 180 Grad-Winkel an mehreren Seiten vorhanden.
- Natürlich können auch separate, reine Verbindungs-Elemente mit z.B. diesem "0"-/"o"-Verbindungs-System oder ähnlichen Systemen Bestandteil dieses Humus-Box-Systems sein.

Denkbar ist weiterhin, dass zusätzlich zu den Hüllen-/Wand-Verbindungs-Systemen auch Wand-Stabilisierungs-Systeme an den Ober- oder/ und Unterkannten - arretiert sind - durch welche die ganzen Länge von Wand-Kannte/-n mit ihrer z.B. U-Form eingehüllt abgedeckt und sicher ist/sind.

Denkbar ist weiterhin, dass in den Umhüllungs-Flächen/-Wänden keine typischen Lüftungslöcher sind. Mit dieser Technik sind folgende Aspekte optimiert, u.a. :
- die Stabilität von Wänden ;
- die Stabilität der gesamten Humus-Box;
- die Gleitfunktion der Humus-Box-Wände (Kompost verhakt sich nicht in Löchern);
- die Verrottungsresistenz von Wänden (Sonne und Eis haben weniger Angrfiffspunkte);
- die Sonnen-Abschirmung;
- die Kälte-Abschirmung;
- das Thermo-System (Humusierungswärme entweicht nicht aus Löchern);
- die Wasser-Abschirmung (Schutz gegen eindringendes Regenwasser);
- die Luft-Abschrimung (Austrockungsschutz für Kompostes oder/und Humuses) ;
- die Ungeziefer-Abschirmung;
- die Geruchs-Abschirmung;
- die technische Effizienz von alternativen Durchlüftungssystemen;
- die Wandproduktions-Effizienz, da mehr Massenware möglich (alle Wände können für alles genutzt werden);
- die Wandproduktionseffizienz, da weniger Maschinen nötig (keine Lochbohrer-Maschine);
- die Wandproduktionseffizienz, da weniger Guss-Formen nötig (mit und ohne Löchern);
- die Wandproduktionseffizienz, da weniger Material nötig (Guss-Verstärkung an Löchern);
- die Wandproduktionseffizienz, da mehr, nun technisch weniger resistente Wände einsetzbar sind;
- die Technik dieser hermetisch abriegelbaren "Humus"-Box ohne Lüftungs-Löcher ist in geänderter Form (u.a. flache und beliebig verlängerbare Wände) auch für andere Zwecke nutzbar (z.B. Flächen-Abdeckung zur Unkraut-Vernichtung);
- die Technik der dem Zufall überlassenen Lüftung durch Lüftungslöcher ist nun durch die Technik von keinen Löchen in den Wänden - und einer besseren, bewußt steuerbaren Lüftungstechnik - ersetzt.
- Die Qualität des Humus wird durch löcherlose Wände erhöht, da die Kompost-Mineralien nicht durch z.B. eindringendes Regenwasser bzw. extremer Feuchte ausgewaschen werden können (insbesondere wenn Wind die Nässe hineindrückt) - und der Kompost auch nicht - durch zu viel trockenen Wind durch die Luftlöcher - zu weniger qualitativem Heu ausgetrocknet werden kann.

Das technische Konzept der Löcher-Vermeidung ist insbesondere auch dadurch gekennzeichnet, dass auch keine Lüftungs-Schlitze z.B. an den Wänden bei den Verbindungsteilen oder bei sonstigen Funktionen (wie Kompost-Trenn-Fächer oder -Trenn-Barren) vorhanden sind.

Denkbar ist weiterhin, dass die Umhüllungs-Seiten-Flächen/Wände mit einem stabilen Deckel versehen sind, und diese Konstruktion damit ein abgedeckter Raum ist. Dieser Deckel besteht aus einer stabilen Platte, welche auf der Oberkante der Humus-Box-Umhüllung/-Wände aufliegt und diese gegen z.B. Regenwasser abdichtet. Dieser Deckel ist dadurch gekennzeichnet dass
- der Deckel mit den an der Unterseite dieser Platte befestigten simplen Stahlspangen - sowie mit der Kombination mit z.B. Schrauben und deren Schraub-Köpfen an den oberen Innenseiten der Wände - ein neuartiges System im Humus-Box-Bereich ist;
- die Stahlspangen, als weit geöffnete L-Form konzipiert, von bedingt biegungsresistenten, jedoch dennoch angewinkelten Stahlblechen sind und an dem Deckelbrett fest arretiert sind: z.B. zwei auf einer Seite und eine auf der anderen Seite des Deckels. Diese Stahlspangen stehen unter Spannung gegen die schrägen Wand-Oberkanten der Humus-Box, womit der Sitz der Deckelplatte abgesichert ist, wobei weiterhin ein sicheres und leichtes Öffnen und Schließen technisch möglich ist.

Diese Deckel-Lösung zeichnet sich insbesondere in Punkto Technik aus durch:
- eine stabile Deckelplatte,
- technisch leicht öffenbar und schliessbar,
- schier unverrottbares Stahlspangen-Verschluss-System,
- häufiger Austausch anfälliger Öffnungs-/Schließ-Scharniere ist obsolet,
- Schlösser sind obsolet,
- (sensible) Deckel-Ränder sind nicht erforderlich,
- für extrem regnerische Gebiete gibt es technische Abdichtungs-Leisten zwischen Deckel und Oberkannte der Wände,
- Schutz gegen Regenwasser-Durchnässung,
- Schutz gegen Sonnen-Austrocknung,
- Schutz gegen Wind-Austrocknung,
- Schutz gegen Kälte,
- Schutz gegen Ungeziefer,
- Schutz gegen Wärmeverlust bei Schnell-Humusierung,
- verschiedene Lüftungseinstellungen und gleichzeitigen Schutz gegen Regenwasser,
- Schutzarretierungen gegen das Wegwehen bei starkem Wind: dieses ist gewährleistet durch an den Schließspangen vorgesehenen Löchern mit ein- oder zweiseitigen an die Löcher anschließenden Einrastungs-Schlitzen (wie alte Schlüssellöcher, mit beidseitigen Schlitze) für das "Fanken" der Schrauben/-Köpfe, welche an den Innenseiten der Humus-Box-Wände sind,
- keine Lüftungs-Löcher oder -Schlitze für unkontrollierte Durchlüftung,
- besonders fester Halt des Deckels durch seine Spangen, resultierend auch aus dem technischen Aspekt der besonders schräg verlaufenden Wände,
- Deckel-Verschluss-Technik mit verschiedenen Öffnungs-Positionen mit besonderer Fixierbarkeit der Durchlüftungs-Öffnungsweite,
- Verschlossen: z.B.: zwei unter Gegendruck stehende Stahlblech-Spangen drücken schräge unter die schräge Innenseite der (hier) linken Außenwandseite - und z.B. eine unter Gegendruck stehende Stahl-Spange drückt schräge unter die schräge Innenseite der (hier) rechten Außenwandseite,
- Einseitig etwas geöffnet: z.B. rechte Stahl-Spange mit einem oder mehreren Arretierungs-Löchern in dem freien, abstehendem Bereich der Stahl-Spange ist z.B. hinter einem herausstehendem Schraubenkopf an dem Stiehl der Schraube in einem der Löcher im Stahl eingehakt. Die Schraube befindet sich an der Innenseite der Oberkannte der (hier) rechten Außenwand und ist nicht ganz eingeschraubt. Das Arretierungs-Loch in der Stahl-Spange kann nach oben oder/und unten hin in einem Schlitz verengt sein, um noch Halt-Sicherer zu sein. Der Deckel kann nur in einem der Löcher arretiert sein oder aus einem der Löcher gelöst sein, wenn genau die etwas größere Öffnung im Blech manuell nach innen gedrückt ist - und kann sich technisch nicht durch einen Windstoß öffnen.
- Einseitig etwas mehr geöffnet oder verschlossen: in verschiedene Löcher der Stahl-Spange einrastbar.
- Zweiseitige Öffnung: wie bei einseitiger Öffnung. Dann müssen die beiden Stahl-Spangen auf der (hier) linken Seite der Humus-Box entsprechend arretiert sein.
- mit der schiefen Einstellung erfolgt technisch ein Absaugen von Luft aus der Humus-Box, wenn die geöffnete Seite in der gleichen Richtung steht, in welche der Wind weht. Ein Optimum wird hier erreicht, wenn die Humus-Box technisch drehbar ist.
- mit der schiefen Einstellung kann technisch ein Durchpusten mit Luft in die Humus-Box hinein erfolgen, wenn die geöffnete Seite gegen die Windrichtung steht. Ein Optimum wird hier erreicht, wenn die Humus-Box technisch drehbar ist.
- Dieses technische Lüftungssystem durch Schräglage des Humus-Box-Deckels unter aktiver Nutzung der natürlichen Winde ist ein Teil des Lüftungskonzeptes, durch welches sich z.B.:
- Lüftungsöffnungen im Wand- oder/und Deckel-Bereich der Humus-Box erübrigen und
- auch ein "Umwälzen" von Kompost mangels Luft (wie bei z.T. Box-Thermo-Modellen erforderlich) nicht erforderlich ist.
- Dieses technische Lüftungssystem durch Schräglage des Humus-Box-Deckels unter aktiver Nutzung der natürlichen Winde ist dadurch optimiert, dass an den (bei schräger Deckelpositionierung schräg verlaufenden) Seitenbereichen des Humus-Box-Deckels in den Bereichen, wo die Innenkannten der Humus-Box-Wände beginnen, zusätzliche, nach unten in die Humus-Box ragende Wände angebracht sind. Diese Wände sind nur so tief, wie es die Arretierungen der Deckel-Positionierung erfordern. Saug- und Pustewirkung wirken auf diese Weise verstärkt. Die seitlichen Endstücke dieser Wände sind zum Zentrum des Deckels hin abgerundet oder abgeschrägt gestaltet, um beim Hochkannten des Deckels nicht an den Humus-Box-Innenseiten der Wände zu verhaken. Die Arretierungs-Stahl-Spangen sind daneben, zum Zentrum hin, arretiert. Diese Wände sind auch ein weiterer stabilisierender Aspekt am Deckel.
- Mit der gleichen Spangen-Art ist ein Haken - eine Aufhängungs-Spange - vorhanden, welcher zum Aufhängen des Deckels am oberen Rand der Humus-Box geeignet ist. Die Lösungskombination aus technisch leicht ganz abnehmbarem und technisch leicht aufhängbarem Deckel erleichtert das Einfügen der insbesondere Gartenreste in den üblichen größeren Mengen aus z.B. Rasenmäher-Säcken oder Häcksler-Kisten extrem.
- Der besondere Halt des Deckels im aufgehängten Zustand, an der Aufhängungs-Spange - welche an einer Seite platziert ist und sich zur gegenüberliegenden Seite öffnet, um das nach unten ziehende Gewicht für Haltungsstabilität zu nutzen - und dem angelegten Zustand an einer Außenwand resultiert auch aus dem technischen Aspekt der besonders schräg verlaufenden Wände.

Denkbar ist weiterhin, dass der untere Abschluss dieser stehenden Humus-Box eine stabile, tragende Boden-Platte ist. Diese besteht z.B. aus
a) einem Gitter- mit oder ohne Rahmen (Rahmen, wie z.B. bei Sandsiebe-Systemen üblich) und - falls Gitter oder Gitter mit Rahmen nicht stabil genug sind - ein Stützungs-System (z.B. durchlaufende unbiegsame Stahlstangen, welche am Rahmen arretiert sind) -oder
b) einer durchlöcherten Bodenplatte aus z.B. Holz, Metall oder Kunststoff und ist insbesondere dadurch gekennzeichnet, dass sie
c) in verschiedenen Versionen und Größen gefertigt ist - und es für alle marktüblichen Modelle eine Version gibt,
d) eine separate Einheit ist, oder
e) mit einem oder/und verschiedenen Arretierungssytemen mit der Humus-Box verbunden ist
f) an einer der Humus-Box-Seiten-Wände mit z.B. einem oder mehreren z.B. Scharnier/en befestigt ist - oder / und
g) an mehreren oder allen (übrigen) Wänden mit jeweils einem flexiblen Schließ- und Öffnungs-Mechanismus (wie z.B. jene mit einem Ösen-/Blechstangen-Klappmechanismus, der von Kisten oder Werkzeug-Kästen/-Hütten bekannt ist) verbunden ist.

In dieser technischen Ausführung ist das Boden-System eine stabile Komponente, welche zugleich die Humus-Box als solche stabilisiert - und auch ein stabiler, tragender Abschluss für stehende Humus-Box-Systeme.

Dieses stabile Boden-System ist technisch geeignet, z.B.:
- als Auflage für Kompost und Humus in der Humus-Box;
- für den Flüssigkeitsausfluss aus dem Humusierungs-Prozess;
- für eine erhöhte Platzierung der Humus-Box auf z.B. Stützen;
- für Durchlüftbarkeit von unten;
- für die Belüftbarkeit der besonders gefärdeten Bereiche in der unteren Mitte des Komposthaufens in der Humus-Box, welche sonst systemtechnisch kaum erreichbar sind;
- zur Abwehr von Ungeziefer durch das erhöhte Aufstellen oder/und durch nur kleine Löcher in der Bodenplatte;
- damit alles beim Kippen stabiler ist;
- damit alles beim Versetzen stabiler ist;
- um im gekippten Zustand als Abdeckung offen oder verschlossen zu sein;
- um z.B. für Humusentnahme offen zu sein.

Denkbar ist weiterhin, dass die Humus-Box systemtechnisch erhöht aufgestellt ist, um rein durch diese Technik eine Durchlüftung des besonders gefährdeten unteren, mittigen Bereiches der Humus-Box zu gewährleisten. Die für den Kompostierungsprozess nötigen Bodenlebewesen werden mittels Zuführung von Muttererde oder sogenannten "Schnellkompostern" dem Kompost in der Humus-Box beigemischt. Als Erhöhungsmöglichkeit sind im Folgenden Beispiele aufgeführt:
Denkbar ist weiterhin, dass unter der Bodenplatte ein z.B. Räder- oder Kugel-Roll-System angebracht ist, insbesondere dadurch gekennzeichnet, dass somit die Humus-Box
- Erhöht aufgestellt ist, um eine Unterlüftung technisch zu ermöglichen
- verschiebbar ist
- leichter kippbar ist - dadurch dass der Schwerpunkt
   - weiter nach oben versetzt ist und
   - beim Kippen nur noch auf z.B. 2 Rädern lastet und
   - durch die mehr im inneren Bereich des Bodenbrettes liegenden Räder - weg vom Boden-Rand und hin zur Mitte - verlagert ist
- bei feststellbaren Rädern auf der Seite, zu welcher gekippt ist, auch mit Rädern kippstabil ist.
- trotz Rädern, für die Humus-Entnahme öffenbar ist.

Denkbar ist weiterhin, dass diese Humus-Box mit ihrer Bodenplatte auf Erhöhungen aufgestellt ist - z.B. auf Steinen oder vier Füßen, bzw. technisch komplexer auf z.B. zwei dickeren z.B. parallel aufgestellten - und zur Stabilität auch quer verbundenen - Holzbalken, welche alternativ zu - oder zusätzlich mit - Räder-System möglich sind und welche insbesondere dadurch gekennzeichnet sind, dass
- die Erhöhungen nicht mit der Humus-Box verbunden sind bzw. alternativ
- die Erhöhungen mittels Schwenksystemen, wie z.B. Scharnieren, mit z.B. der Bodenplatte der Humus-Box verbunden sind,
   womit insbesondere
- ein noch sichereres Kippen möglich ist
- ein Öffnen des Humus-Box-Bodens trotz Arretierung an die Erhöhungen möglich ist, insbesondere, wenn beide Scharniersysteme an der gleichen Seite sind.

Denkbar ist weiterhin, dass - parallel zu diesen Lüftungstechniken - technische Systeme vorhanden sind, welche sich dadurch auszeichnen, dass sie geeignet sind für
- sowohl eine Verstärkung der Durchlüftung des Inhalts im Inneren der Box
- als auch eine Abschirmung der Durchlüftung des Box-Inhaltes
und, dass das System für kleinere wie auch für größere Humus-Boxen geeignet ist.
Dieses ist bei kleineren Humus-Box-Modellen z.B. dadurch erreicht, dass ein "Anti-/Pro-Lüftungs-Brett" an der unteren Kannte einer der Seiten des Humus-Box-Boden-Brettes mittels z.B. einem langen Scharnier angeschraubt ist. Das Scharnier ist so angebracht, dass es in der ersten Haupt-Lage geschlossen ist, mit dem querlaufendem Scharnier-Mittel-Bolzen nach außen (weg vom Humus-Boden-Brett und Anti-/Pro-Lüftungs-Brett) gerichtet. In dieser Lage sorgt das am unteren Bereich des Scharniers festgeschraubte Brett dafür, dass eine Durchlüftung an dieser Humus-Box-Seite - zumindest von unten - unterbunden ist.
Dieses System ist bei allen Seiten fast gleich - mit einigen kleinen Unterschieden. Die Anti-/Pro-Lüftungs-Bretter der linken und rechten Seite sind außerhalb der vorderen und hinteren Anti-/Pro-Lüftungs-Bretter montiert - jedoch alles innerhalb des Grundrisses und Außenkannten der Humus-Box-Boden-Platte. Des weiteren ist auf den (hier) vertikal verlaufenden schmalen Brett-Endseiten der rechten und linken Anti-/Pro-Lüftungs-Bretter, an dessen unteren Kannten jeweils eine Schraube - nach vorne und auf der anderen Seite hinten rausragend - angeschraubt, welche als feste Schrauben jeweils ein schwenkenbares flaches Blech mit Einrastlöchern halten. In diese Einrastlöcher rasten Schraubenköpfe ein, welche an den unteren Ecken der Außenseiten der "vorderen" und "hinteren" Anti-/Pro- Lüftungs-Bretter eingeschraubt sind. Dabei ist in der ersten Hauptlage jeweils dieser zuletzt genannte Schraubkopf in dem jeweils ersten Einrastloch des jeweiligen Bleches eingerastet - jenes Loch, welches dem Schwenk-Loch-Schrauben-/Blech-Bereich am nahesten ist.
Soll Luft in die Humus-Box kanalisiert hineinströmen, so ist das Schwenkbleck mit Einrastlöchern - z.B. mit einem mittlerem Loch in der dafür nutzbare Schraube - eingerastet. Hierdurch ist das Anti-/Pro-Lüftungs-Brett z.B. mit 45 Grad schräg nach oben positioniert.

Soll der ganze Boden der Humus-Box nur leicht umlüftet sein, so können alle Anti-/Pro-Lüftungs-Bretter nach oben arretiert sein. Jetzt ist das Schwenkblech nicht mehr im Außenbereich an der gegenüberliegenden Schraube des quer verlaufenden "vorderen" oder "hinteren" Seite des Anti-/Pro-Lüftungs-Brettes befestigt, sondern an der gleichen Schraube, welche aber nun, durch die Brettdrehung, im inneren Bereich, zur Humus-Box hingewendet, liegt.Das gleiche System kann auch an ein Balkenfundament angebracht sein. Aber auch Varianten für das Öffnen von nur einer oder zwei Seiten sind möglich - insbesondere, wenn eine Seite des Balkenkonstrukts aus einem Balken ohne Öffnung besteht. Dann gilt dieser Balken als Pendant für die Seite, wo - nach obiger Beschreibung - die Einrastung möglich ist.

Die Höhe dieser Anti-/Pro-Lüftungs-Bretter ist abhängig von der Höhe des jeweiligen Humus-Box-Erhöhungs-Systems.

Denkbar ist weiterhin, dass an dieser Humus-Box auf einer Seite - auf Halber Höhen-Strecke dieser Seite, mittig - ein Brett, an z.B. einem Schwenk-Scharnier arretiert ist.

In einer besonderen Ausgestaltung hat dieses Brett am unteren Ende eine Auflage, z.B. eine Schwenk-Fuss-Platte, welche beim Ausschwenken des Brettes durch das Kippen der Humus-Box waagerecht positioniert ist.

Das Schwenkbrett öffnet sich beim Kippen, wenn zu der Seite gekippt wird, wo dieses Brett arretiert ist. Beim Erreichen des waagerechten Winkels von dieser dann unten liegenden Außenwand, ist dieses Brett ( in besonderer Ausgestaltung: mit seiner Schwenk-Fuss-Platte) eine Bodenauflage.

Dieses Schwenkbrett ist mit einem Einstell-System zur Erzielung der gleichen Höhe, wie jene, worauf die Humus-Box steht, ausgestattet. Auf diese Weise ist die Humus-Box liegestabil.

In dieser Lage ist der Humus-Box-Bodenbereich schief geneigt. Durch diese Technik sind Kompost und Humus in der Humus-Box stabil. Die Bodenplatte liegt - ohne Belastung - nur noch auf dem Kompost und Humus und hat hier keine system-technische Halte-Funktion. Sie ist öffenbar. Der Humus ist abtragbar.

Denkbar ist weiterhin, dass ein (oder mehrere Rohre) Rohr mit Lüftungslöchern z.B. mittig und senkrecht - von unten bis oben ragend - in einer Humus-Box an der brisantesten Feuchtigkeitsstelle - platziert ist und insbesondere dadurch gekennzeichnet ist, dass
- Dieses Lüftungsrohr aus einem bzw. verschiedenen Materialien ist oder sein kann, wie z.B. aus Metall oder Kunststoff.
- die Lüftungslöcher z.B. nur im untersten Bereich sind oder/und
- die Lüftungslöcher auf verschiedenen Höhen sind
- die Lüftungslöcher - in besonderer Ausgestaltung - offen oder verschlossen sind - und zwar mittels verschiedener Dreh-Positionen eines biegsamen aber in sich stabilen Inlays wo Löchern an verschiedenen Stellen sind, wodurch je nach Positionierung die - je nach Höhe jeweils an einer anderen Seite des Rohres platzierten - Rohr-Löcher offen oder verschlossen sind
- dieses Rohr entweder lose ist oder - in Führungen am Boden oder/und Deckel oder/und seitlich an einer oder mehreren Wand/Wänden - arretiert ist
- dieses Rohr an einem oder mehreren Ausgang/Ausgängen nach außen angeschlossen ist -bzw. "eingebunden" ist (wenn nur generelle Luftlöcher vorhanden sind) - oder/und
- dieses Rohr ( bzw. zumindest eines der Rohre ) zugleich einen eigenen Luft-Ausgang hat, welcher z.B. durch ein Loch in dem Humus-Box-Deckel mit dem Außenumfeld verbunden ist
- in einer besonderen Ausgestaltung - der eigene Luftausgang dieses Rohres mit einem Dach gegen Regen versehen ist, unter welchem der Luftausgang des Zentralrohres noch Luft herauslassen kann oder/und seitliche Lüftungslöcher z.B. an der oberen Rohrseite vorhanden sind
- in einer besonderen Ausgestaltung an dem Rohr, welches den Humus-Box-Bodenbrett- Kontakt hat (und bei Verlängerung des Systems auch beibehält) eine Einfassung ist, welche an dem Rohr angeschlossen ist, wo Fixierung oder Beweglichkeit einstellbar ist, und welche am Humus-Box Bodenbrett arretiert ist - oder aber, bei anderen Systemen, dadurch am Erdboden stabilisiert ist, dass hier ein Spieß eingestochen ist, welcher direkt im Boden ist bzw. zunächst durch ein Erdgitter gestochen ist;
- in einer besonderen Ausgestaltung, dieses Rohr verlängerbar ist. Dieses erfolgt z.B. mit einem zweiten, im Umfang z.B. kleinerem Rohr, welches z.B. innerhalb des ersten Rohres hineingesteckt ist (bei Wahl eines größeren Rohres draufgesteckt ist). Die Durchlüftung erfolgt durch Luftlöcher von gemeinsamen (Zwischen-)Löchern oder individuellen, separaten Löcher an verschiedenen Stellen und in verschiedenen Höhen des /r Rohre/s, je nachdem wie sie zusammengesteckt oder auseinander verlängert sind. Die zwei Rohre - oder auch weitere Rohre - die ineinander oder aneinander gereiht sind - sind z.B. mit VerbindungsstückenZ-Systemen oder z.B. mit einem Schrauben-/Mutter-System, welches z.B. durch ein - durch alle Rohre gehendes - Loch gesteckt wird - miteinander auf einer bestimmten Länge fest verbunden. Diese Länge ist durch verschiedene Durchgangslöcher - oder anderweitige Arretierungsmöglichkeiten an verschiedenen Stellen - variabel. Die Durchlüftung ist durch gemeinsame oder rohrspezifische Luftlöcher gewährleistet.

Denkbar ist weiterhin, dass die Durchlüftung dadurch verstärkt ist, dass ein Luft-Trichter an oder auf der Humus-Box arretiert ist, welcher insbesondere dadurch gekennzeichnet ist, dass
- der Lufttrichter in verschiedenen Positionen arretierbar ist. Eine Arretierung ist z.B. durch eine L-förmige Metall-Leiste möglich, in welche der dünnere Teil des Trichters - oder ein hier verlängernd laufendes Rohr - in ein Loch an der oberen Kannte des kurzen Teils des L's integriert ist, welches dadurch senkrecht steht, dass das L auf dem langen Teil des L's liegt. Zum anderen ist die größere, offene Seite des Trichters mit seiner Außenkannte auf dem liegenden langen Teil des L's arretiert. In dem z.B. mittlerem Teil des L's ist nun z.B. eine Schraube z.B. in ein Loch von z.B. dem Humus-Box-Deckel durchgeführt und mit einer Mutter z.B. unter dem Deckel befestigt. Über diese Schraube ist der Luft-Trichter nun in jede Richtung drehbar. Eine Arretierung ist dadurch gewährleistet, dass z.B. ein Stab in ein weiteres Loch des liegenden L-Teils gesteckt ist und in z.B. einem - von vielen rund um das Zentral-Loch verstreuten (Halb-)Löchern - (Halb-)Loch des Deckels arretiert ist. In dieser Form arretiert, ist nun eine Schlauchanbindung zwischen dünnem Ende (bzw. Rohrverlängerung) des Lufttrichters und einem Loch in der Humus-Box möglich; und
- wenn die große Trichterseite gegen die Windrichtung arretiert ist, Luft in die Humus-Box technisch hineingepustet wird; und
- wenn die große Trichterseite in Windrichtung arretiert ist, Luft aus der Humus-Box technisch herausgesogen wird, weil ein Vakuum hinter der großen Trichteröffnung entsteht;
   oder
- die Anbindung des Lufttrichters - alternativ zur Humus-Box-Deckel-Anbringung - mittels Einstecken - der kleineren Trichteröffnung oder eines daran angebundenen Rohres (gemäß o.g. Ansprüche) - in ein Loch in einem Lüftungs-Rohr oder an den seitlichen Flächen der Humus-Box möglich ist; und
- das Lüftungsrohr - bei Anbindung des Trichtersystems - oben verschlossen ist; und
- verschiedene Löcher - zwecks verschiedener Ausrichtungen des Trichters - am Rohr vorhanden sind, wenn das Lüftungs-Rohr fest arretiert ist; und
- die Rohrlöcher, die jeweils nicht mit dem Trichter verbunden sind, verschlossen sind; oder
- der Trichter an einem Loch fest arretiert ist, wenn das Lüftungs-Rohr drehbar oder/und feststellbar gestaltet ist, und
- der Trichter an einem stabilen größerem, als "Fahne" fungierendem, z.B. Brett, direkt an diesem Brett - oder indirekt mittels dessen Verlängerungen (z.B. über Stangen oder U- Profil-Leisten und z.B. über Löcher im Lüftungsrohr) - in der Dreh- und feststellbaren Variante) fest angebunden ist. Dieses ist ein System, welches stets nach der sich ändernden Windrichtung ausgerichtet ist und die jeweils gewünschte Einstellung (Pusten oder Saugen) mit sich dreht und ausrichtet - auch weil die Fahnenkraft, durch dessen Fahnen-Größe, größer ist, als die potentielle Wegdrift-Kraft des Windes gegenüber der großen offenen Seite des Trichters. Wenn der Wind in die Humus-Box hinein pusten soll, ist die Brett-Fahne auf der Seite hinter der größeren Öffnung des Trichters an z.B. dem Lüftungsrohr arretiert. Wenn Luft aus der Humus-Box herausgesogen werden soll, dann ist die Brett-Fahne vor der größeren Öffnung des Trichters montiert und z.B. in Löchern des Lüftungsrohres arretiert.
- der Trichter an stabilen Rotations-Mechanismen/-Systemen oder Punkten auf dem Deckel oder/und an den Wandseiten oder/und (indirekt über das Rohr) Boden der Humus-Box angebunden ist, aber möglich ist auch eine separate Aufstellung an einer windigeren Stelle welche mit einem Schlauch an die Box angeschlossen ist.
- z.B. am Trichter oder Rohr ein Regulierungssystem angebunden ist, mit welchem die Saug- oder Pust-Kraft regulierbar ist, oder/und einfach nur öffen- und schließbar ist. Dieses kann z.B. eine einfache Scheibe sein, welche an einem Außenpunkt der größeren Trichteröffnung senkrecht, relativ fest, aber schwenkbar arretiert ist und mit wessen Schwenkung die Trichteröffnung willkürlich größer oder kleiner ist - oder welche einfach nur anbringbar oder entfernbar ist.

Denkbar ist weiterhin, dass ein Dämmungs-System vorgesehen ist, welches sich dadurch auszeichnet, dass es Platten aus z.B. Styropor sind, und welches sich insbesondere dadurch auszeichnen, dass
- diese Platten an die Außenseiten der Humus-Box angelegt sind;
- diese Platten entlang der seitlichen Außenkannten der Humus-Box z.B. im Winkel von 45 Grad nach außen breiter werdend geschnitten sind, womit alle Wände nacheinander miteinander passend zusammen anlegbar sind;
- diese Platten mittels Klebeband oder z.B. L-Winkel-Leisten (mit Arretierungssystem) miteinander vereint und abgesichert sind;
- eine angewinkelte Deckel-Platte auf den durch die Wand-Schrägung angewinkelten Oberkannten der Styropor-Platten als Abdeckung positioniert - und mit ähnlichen Systemen, wie bei den Wänden mit diesen verbunden - ist;
- dieser Deckel auch ein herausnehmbares rundes Mittelteil besitzt, durch welches bei Bedarf Platz für ein Lüftungsrohr ist;
- auch der Sockel-Bereich auf diese Weise gedämmt ist;
- das Dämmungs-System nur dann aufgesetzt ist, wenn es erforderlich ist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Komposter wobei der Komposter einen Bodenrost oder Basis-Boden, und Seitenwände aufweist, **dadurch gekennzeichnet, dass** die Seitenwände vom Bodenrost oder Basis-Boden aus schräg nach oben aufeinander zu laufen, dass der Komposter im montierten Zustand derart gelagert ist, dass zwischen dem Bodenrost des Komposters und dem Erdboden auf dem der Komposter bei Verwendung des Komposters steht, ein Luftspalt ausgebildet ist, der sich entlang der gesamten Fläche des Bodenrosts erstreckt.

2. Komposter nach Anspruch 1, **dadurch gekennzeichnet, dass** das Bodenrost oder Basis-Boden gegenüber den Seitenwänden verkippbar ist.

3. Komposter nach einem der vorhergehenden Ansprüche, **dadurch gekennzeichnet, dass** der Bodenrost oder Basis-Boden einen Haltemechanismus aufweist, der den Bodenrost oder Basis-Boden beim Umkippen des Komposters an den Seitenwänden des Komposters festhält.

4. Komposter nach einem der vorhergehenden Ansprüche, **dadurch gekennzeichnet, dass** der Bodenrost ein Gitterrost ist.

5. Komposter nach einem der vorhergehenden Ansprüche, **dadurch gekennzeichnet, dass** der Bodenrost durch eine Anordnung drehbarer Nagelstangen gebildet wird.

6. Komposter nach einem der vorhergehenden Ansprüche, **dadurch gekennzeichnet, dass** die Seitenwände geschlossene Flächen sind.

7. Komposter nach einem der vorhergehenden Ansprüche, **dadurch gekennzeichnet, dass** der Komposter eine Deckelklappe aufweist.

8. Komposter nach einem der vorhergehenden Ansprüche, **dadurch gekennzeichnet, dass** die Tragvorrichtung und/oder der Basis-Boden eine oder mehrere Bodenklappen aufweist.

9. Komposter nach einem der vorhergehenden Ansprüche, **dadurch gekennzeichnet, dass** die Seitenwände untereinander mit Hilfe von Schienen gehalten werden, die sich über die gesamte Länge der jeweiligen Seitenwand erstrecken.

10. Komposter nach einem der vorhergehenden Ansprüche, **dadurch gekennzeichnet, dass** wenigstens die Seitenwände als einstückiges Faltstück ausgebildet sind, bevorzugt der Bodenrost, die Seitenwände und die Deckelklappe, besonders bevorzugt alle Bauteile des Komposters.

11. Komposter nach einem der vorhergehenden Ansprüche, **dadurch gekennzeichnet, dass** an der Deckelklappe ein oder mehrere Lufttrichter ausgebildet ist oder sind.

12. Komposter nach einem der vorhergehenden Ansprüche, **dadurch gekennzeichnet, dass** an den Seitenwänden und/oder an der Deckelklappe abnehmbare Dämmplatten montiert sind.

13. Kompostersystem mit einem Komposter entsprechend einem der Ansprüche 1 bis 12, und mit einer Nachfüllvorrichtung für Mutterboden.

14. Verfahren zur Kompostverarbeitung mit Hilfe eines Komposters nach einem der Ansprüche 1 bis 12, **dadurch gekennzeichnet, dass** das Verfahren die Schritte aufweist:
a. Bereitstellen eines Komposters entsprechend einem der Ansprüche 1 bis 12
b. Einfüllen einer dünnen Schicht von Kompost aus Blätter oder Gras, welche das Wegsacken des im nachfolgenden Schritt einzufüllenden Mutterbodens verhindert,
c. Einfüllen von Mutterboden durch in den Komposter als zweite Schicht
d. Einfüllen von Kompostmaterial,
e. Abwarten des Kompostierungsvorgangs bis zumindest in der untersten eingefüllten Schicht Humus entstanden ist,
f. Kippen des gesamten Komposters, so dass er auf einer der schrägen Seiten liegt,
g. Aufklappen des Bodenrosts oder Basis-Boden,
h. Entnahme des entstandenen Humus,
i. Zuklappen des Bodenrosts oder Basis-Boden,
j. Wiederaufstellen des Komposters
k. Wiederholung der Schritte c. bis i..

15. Verfahren zur Kompostverarbeitung mit Hilfe eines Kompostersystems nach Anspruch 13, **dadurch gekennzeichnet, dass** das Verfahren die Schritte aufweist:
a. Bereitstellen eines Komposters entsprechend einem der Ansprüche 1 bis 12
b. Einfüllen einer dünnen Schicht von Kompost aus Blätter oder Gras, welche das Wegsacken des im nachfolgenden Schritt einzufüllenden von Mutterbodens verhindert,
c. Einfüllen von Mutterboden durch in den Komposter als zweite Schicht
d. Einfüllen von Kompostmaterial
e. Abwarten des Kompostierungsvorgangs bis zumindest in der untersten eingefüllten Schicht Humus entstanden ist,
f. Entnahme des entstandenen Humus,
g. Optional nachfüllen von Mutterboden mit Hilfe der Nachfüllvorrichtung,
h. Wiederholung der Schritte c. bis f.
